(19) **Europäisches Patentamt / European Patent Office / Office européen des brevets**

(11) **EP 4 333 343 A1**

(12) # EUROPEAN PATENT APPLICATION
published in accordance with Art. 153(4) EPC

(43) Date of publication:
06.03.2024 Bulletin 2024/10

(21) Application number: 22827393.4

(22) Date of filing: 09.06.2022

(51) International Patent Classification (IPC):
*H04L 5/00* $^{(2006.01)}$

(52) Cooperative Patent Classification (CPC):
H04L 1/18; H04L 5/00; H04W 72/04

(86) International application number:
PCT/CN2022/097892

(87) International publication number:
WO 2022/267897 (29.12.2022 Gazette 2022/52)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 21.06.2021 CN 202110688161

(71) Applicant: Huawei Technologies Co., Ltd.
Longgang
Shenzhen, Guangdong 518129 (CN)

(72) Inventors:
• SU, Hongjia
  Shenzhen, Guangdong 518129 (CN)
• DONG, Lei
  Shenzhen, Guangdong 518129 (CN)
• GUO, Wenting
  Shenzhen, Guangdong 518129 (CN)
• LU, Lei
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **COMMUNICATION METHOD AND APPARATUS**

(57) A communication method and apparatus are provided. The communication method includes: A first terminal apparatus may receive first data from a second terminal apparatus, and determine a feedback time unit in a channel occupancy time, where the feedback time unit corresponds to the first data. The first terminal apparatus may transmit first feedback information on a first frequency domain resource in the feedback time unit, and transmit second feedback information on a second frequency domain resource. The first feedback information is an acknowledgment or a negative acknowledgment for the first data, the first frequency domain resource is determined based on a time-frequency resource carrying the first data, the first frequency domain resource and the second frequency domain resource belong to a first channel, and the first frequency domain resource and the second frequency domain resource do not overlap. Communication reliability of an SL system in an unlicensed frequency band can be improved.

| First terminal apparatus | | Second terminal apparatus |
| --- | --- | --- |
| | | S101: Access a first channel |
| | S101: Transmit first data | |
| S102: Determine a feedback time unit in a channel occupancy time | | Determine the feedback time unit in the channel occupancy time |
| S103: Access the first channel | | |
| | S103: Transmit first feedback information on a first frequency domain resource in the feedback time unit, and transmit second feedback information on a second frequency domain resource in the feedback time unit | |

FIG. 8

**Description**

**CROSS-REFERENCE TO RELATED APPLICATIONS**

This application claims priority to Chinese Patent Application No. 202110688161.4, filed with the China National Intellectual Property Administration on June 21, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a wireless communication system, different used frequency bands may be classified into a licensed frequency band and an unlicensed frequency band. In the unlicensed frequency band, a transmit node needs to access a signal in a contention manner.

In a current contention access mechanism, energy-based detection and signal type detection are usually used. In energy-based detection, an energy detection threshold (energy detection threshold) needs to be set. When detected energy exceeds the energy detection threshold, it is determined that a channel is busy, and the transmit node is not allowed to access the channel. When detected energy is lower than the energy detection threshold for more than a period of time, the transmit node is allowed to access the channel.

In a current new radio (new radio, NR) sidelink (sidelink, SL) system, physical sidelink feedback channel (physical sidelink feedback channel, PSFCH) information may be used to carry hybrid automatic repeat request (hybrid automatic repeat request, HARQ) feedback information.

However, a current PSFCH transmitting manner is not applicable to the unlicensed frequency band. As a result, communication reliability of a current SL system cannot be ensured.

**SUMMARY**

This application provides a communication method and apparatus, to improve communication reliability of an SL system in an unlicensed frequency band.

According to a first aspect, a communication method is provided. The communication method may be performed by a first terminal apparatus. The first terminal apparatus includes a first terminal device or a member in the first terminal device. In this application, the first terminal device may be a data receive end in vehicle to everything (vehicle to everything, V2X) communication, and a second terminal device may be a data transmit end in V2X communication. It should be understood that the first terminal device feeds back a data receiving status to the second terminal device by using HARQ feedback information. The member in the first terminal device may be, for example, a processor, an in-vehicle communication module, a chip, or a chip system that is loaded in the data receive end. The first terminal apparatus supports direct communication (PC5) interface communication.

The method provided in the first aspect includes: The first terminal apparatus may receive first data from a second terminal apparatus; and the first terminal apparatus determines a feedback time unit in a channel occupancy time, where the feedback time unit corresponds to the first data. The first terminal apparatus may further access a first channel, transmit first feedback information on a first frequency domain resource in the feedback time unit, and transmit second feedback information on a second frequency domain resource in the feedback time unit, where the first feedback information is an acknowledgment or a negative acknowledgment for the first data, the first frequency domain resource is determined based on a time-frequency resource carrying the first data, the first frequency domain resource and the second frequency domain resource belong to the first channel, and the first frequency domain resource and the second frequency domain resource do not overlap.

The second terminal apparatus may be the second terminal device or a member in the second terminal device.

By using the foregoing method, the first terminal apparatus may receive the first data from the second terminal apparatus, and determine the feedback time unit in the channel occupancy time, where the feedback time unit corresponds to the first data. The first terminal apparatus may transmit the first feedback information on the first frequency domain resource in the feedback time unit, and transmit the second feedback information on the second frequency domain resource. The first feedback information is an acknowledgment or a negative acknowledgment for the first data, the first frequency domain resource is determined based on the time-frequency resource carrying the first data, the first frequency domain resource and the second frequency domain resource belong to the first channel, and the first frequency domain resource and the second frequency domain resource do not overlap. In this way, communication reliability of an SL system in an unlicensed frequency band can be improved.

In a possible design, the channel occupancy time is a maximum channel occupancy time determined by the second terminal apparatus, or the channel occupancy time is less than a maximum channel occupancy time determined by the second terminal apparatus.

In a possible design, the first terminal apparatus may further receive indication information of the channel occupancy time from the second terminal apparatus. The second terminal may flexibly indicate a sidelink feedback resource of the channel occupancy time based on a service feature of the second terminal, for example, a delay or a data packet size, to improve feedback resource utilization.

In a possible design, the second frequency domain resource is indicated by a network device, or is preconfigured, or is predefined.

In a possible design, the second frequency domain resource includes two discontinuous resource blocks, a frequency domain gap between the two discontinuous resource blocks is *Offset* resource blocks, and *Offset* satisfies: Bandwidth corresponding to *(Offset* + 2) resource blocks is greater than or equal to a product of bandwidth of the first channel and a first coefficient, and the first coefficient is greater than 0 and less than or equal to 1.

According to this design, the first terminal apparatus can occupy more bandwidth of the first channel to meet an occupied channel bandwidth (occupied channel bandwidth, OCB) requirement of a non-access frequency band.

In a possible design, the second feedback information may be replication information of the first feedback information, or the second feedback information is a predefined bit stream.

In a possible design, the second frequency domain resource is an $m^{th}$ interlaced resource in the first channel, and the interlaced resource includes at least two resource blocks interlaced in frequency domain, where $m$ is an integer, $m$ is greater than or equal to 1, and is less than or equal to a total quantity of interlaced resources included in the first channel, and a value of $m$ is predefined, indicated by the network device, or preconfigured.

In a possible design, the first resource block of the second frequency domain resource is an $N1^{th}$ resource block in the first channel, and the last resource block of the second frequency domain resource is an $N2^{th}$ resource block in the first channel, where N1 and N2 are positive integers, and values of N1 and N2 are predefined, indicated by the network device, or preconfigured.

In a possible design, the first frequency domain resource may be determined based on an index and/or a quantity of interlaced resources corresponding to the time-frequency resource carrying the first data and identifier information corresponding to the first data.

In a possible design, that the first terminal apparatus transmits first feedback information on a first frequency domain resource in the feedback time unit includes: The first terminal apparatus transmits the first feedback information on the first frequency domain resource in the feedback time unit based on a first code domain resource, where the first code domain resource is determined based on the index and/or the quantity of interlaced resources corresponding to the time-frequency resource carrying the first data and the identifier information corresponding to the first data.

In a possible design, that the first terminal apparatus determines a feedback time unit corresponding to the first data in a channel occupancy time includes: The first terminal apparatus determines the feedback time unit from a time unit set based on the time-frequency resource carrying the first data, where the time unit set includes at least one time unit, and a time unit in the at least one time unit includes a feedback resource.

In a possible design, a time domain gap between a start location of the first time unit in the time unit set and a start location of the channel occupancy time may be $X_1$ time units, a time domain gap between every two adjacent time units in the time unit set may be $M_1$ time units, $X_1$ and $M_1$ may be predefined, indicated by the network device, indicated by the second terminal apparatus, or preconfigured, $X_1$ is a positive integer greater than or equal to 0, and $M_1$ is a positive integer greater than or equal to 0.

In a possible design, the first terminal apparatus may determine, based on received first indication information, the time unit set from a time unit included in the channel occupancy time, where the first indication information is from the network device or the second terminal apparatus.

In a possible design, the feedback time unit may be the last time unit in the channel occupancy time. The PSFCH resource is at a fixed location in the channel occupancy time, thereby reducing overheads of configuration signaling and indication signaling.

In a possible design, that the first terminal apparatus determines a feedback time unit corresponding to the first data in a channel occupancy time includes: When the channel occupancy time is less than a time threshold, the feedback time unit may be the last time unit in the channel occupancy time.

According to a second aspect, a communication method is provided. The communication method may be performed by a second terminal apparatus. The second terminal apparatus includes a second terminal device or a member in the second terminal device. As described above, the second terminal device may be a data transmit end in V2X communication. The member in the second terminal device may be, for example, a processor, an in-vehicle communication module, a chip, or a chip system that is loaded in the data transmit end. The second terminal apparatus supports communication through a PC5 interface.

The method provided in the second aspect includes: The second terminal apparatus accesses a first channel, and transmits first data to a first terminal apparatus; the second terminal apparatus determines a feedback time unit in a channel occupancy time, where the feedback time unit corresponds to the first data; and the second terminal apparatus may receive first feedback information on a first frequency domain resource in the feedback time unit, where the first feedback information is an acknowledgment or a negative acknowledgment for the first data, and the first frequency domain resource is determined based on a time-frequency resource carrying the first data.

In a possible design, the second terminal apparatus may further receive and discard second feedback information, where the second feedback information is carried in a second frequency domain resource in the feedback time unit, the first frequency domain resource and the second frequency domain resource belong to the first channel, and the first frequency domain resource and the second frequency domain resource do not overlap.

In a possible design, the second frequency domain resource may be indicated by a network device, or is preconfigured, or is predefined.

In a possible design, the second frequency domain resource includes two discontinuous resource blocks, a frequency domain gap between the two discontinuous resource blocks is *Offset* resource blocks, and *Offset* satisfies: Bandwidth corresponding to *(Offset* + 2) resource blocks is greater than or equal to a product of bandwidth of the first channel and a first coefficient, and the first coefficient is greater than 0 and less than or equal to 1.

In a possible design, the second feedback information may be replication information of the first feedback information, or the second feedback information is a predefined bit stream.

In a possible design, the second frequency domain resource is an $m^{\text{th}}$ interlaced resource in the first channel, and the interlaced resource includes at least two resource blocks interlaced in frequency domain, where $m$ is an integer, $m$ is greater than or equal to 1, and is less than or equal to a total quantity of interlaced resources included in the first channel, and a value of $m$ is predefined, indicated by the network device, or preconfigured.

In a possible design, the first resource block of the second frequency domain resource is an $N1^{\text{th}}$ resource block in the first channel, and the last resource block of the second frequency domain resource is an $N2^{\text{th}}$ resource block in the first channel, where N1 and N2 are positive integers, and values of N1 and N2 are predefined, indicated by the network device, or preconfigured.

In a possible design, the channel occupancy time may be a maximum channel occupancy time determined by the second terminal apparatus, or the channel occupancy time is less than a maximum channel occupancy time determined by the second terminal apparatus.

In a possible design, the second terminal apparatus may further transmit indication information of the channel occupancy time to the first terminal apparatus.

In a possible design, the first frequency domain resource may be determined based on an index and/or a quantity of interlaced resources corresponding to the time-frequency resource carrying the first data and identifier information corresponding to the first data.

In a possible design, that the second terminal apparatus receives first feedback information on a first frequency domain resource in the feedback time unit includes: The second terminal apparatus may receive the first feedback information on the first frequency domain resource in the feedback time unit based on a first code domain resource, where the first code domain resource is determined based on the index and/or the quantity of interlaced resources corresponding to the time-frequency resource carrying the first data and the identifier information corresponding to the first data.

In a possible design, that the second terminal apparatus determines a feedback time unit corresponding to the first data in a channel occupancy time includes: The second terminal apparatus may determine the feedback time unit from a time unit set based on the time-frequency resource carrying the first data, where the time unit set includes at least one time unit, and a time unit in the at least one time unit includes a feedback resource.

In a possible design, a time domain gap between a start location of the first time unit in the time unit set and a start location of the channel occupancy time may be $X_1$ time units, a time domain gap between every two adjacent time units in the time unit set may be $M_1$ time units, $X_1$ and $M_1$ may be predefined, indicated by the network device, indicated by the second terminal apparatus, or preconfigured, $X_1$ is a positive integer greater than or equal to 0, and $M_1$ is a positive integer greater than or equal to 0.

In a possible design, the second terminal apparatus may further transmit first indication information to the first terminal apparatus, where the first indication information is used by the first terminal apparatus to determine the time unit set from a time unit included in the channel occupancy time.

In a possible design, the second terminal apparatus may further determine, based on received second indication information, the time unit set from the time unit included in the channel occupancy time, where the second indication information is from the network device.

In a possible design, the feedback time unit may be the last time unit in the channel occupancy time.

In a possible design, that the first terminal apparatus determines a feedback time unit corresponding to the first data in a channel occupancy time includes: When the channel occupancy time is less than a time threshold, the feedback time unit may be the last time unit in the channel occupancy time.

According to a third aspect, an embodiment of this application provides a communication apparatus, to implement the method implemented by the first terminal apparatus in the first aspect or any possible design of the first aspect. The apparatus includes a corresponding unit or member configured to perform the foregoing method. The unit included in the apparatus may be implemented by software and/or hardware. The apparatus may be, for example, a first terminal apparatus, or a member, a chip, a chip system, an in-vehicle communication module, a processor, or the like that can support the first terminal apparatus in implementing the foregoing method.

For example, the communication apparatus may include modular components such as a transceiver unit (or referred to as a communication module or a transceiver module) and a processing unit (or referred to as a processing module). These modules may perform corresponding functions of the first terminal apparatus in the first aspect or any possible design of the first aspect. When the communication apparatus is the first terminal apparatus, the transceiver unit may be a transmitting unit when performing a transmitting step, and the transceiver unit may be a receiving unit when performing a receiving step. The transceiver unit may be replaced by a transceiver, the transmitting unit may be replaced by a transmitter, and the receiving unit may be replaced by a receiver. The transceiver unit may include an antenna, a radio frequency circuit, or the like. The processing unit may be a processor, for example, a baseband chip. When the communication apparatus is the member that has a function of the first terminal apparatus, the transceiver unit may be a radio frequency unit, and the processing unit may be a processor. When the communication apparatus is the chip system, the transceiver unit may be an input/output interface of the chip system, and the processing unit may be a processor of the chip system, for example, a central processing unit (central processing unit, CPU).

The transceiver unit may be configured to perform a receiving and/or transmitting action performed by the first terminal apparatus in the first aspect or any possible design of the first aspect. The processing unit may be configured to perform an action other than receiving and transmitting performed by the first terminal apparatus in the first aspect or any possible design of the first aspect.

Optionally, the communication apparatus may include a transceiver module and/or a communication module.

Optionally, the communication apparatus may include a processor and/or a transceiver. The communication apparatus may further include a memory.

According to a fourth aspect, an embodiment of this application provides a communication apparatus, to implement the method implemented by the second terminal apparatus in the first aspect or any possible design of the first aspect. The apparatus includes a corresponding unit or member configured to perform the foregoing method. The unit included in the apparatus may be implemented by software and/or hardware. The apparatus may be, for example, a second terminal apparatus, or a chip, a chip system, an in-vehicle communication module, a processor, or the like that can support the second terminal apparatus in implementing the foregoing method.

For example, the communication apparatus may include modular components such as a transceiver unit (or referred to as a communication module or a transceiver module) and a processing unit (or referred to as a processing module). These modules may perform corresponding functions of the second terminal apparatus in the first aspect or any possible design of the first aspect. When the communication apparatus is the second terminal apparatus, the transceiver unit may be a transmitting unit when performing a transmitting step, and the transceiver unit may be a receiving unit when performing a receiving step. The transceiver unit may be replaced by a transceiver, the transmitting unit may be replaced by a transmitter, and the receiving unit may be replaced by a receiver. The transceiver unit may include an antenna, a radio frequency circuit, or the like. The processing unit may be a processor, for example, a baseband chip. When the communication apparatus is the member that has a function of the second terminal apparatus, the transceiver unit may be a radio frequency unit, and the processing unit may be a processor. When the communication apparatus is the chip system, the transceiver unit may be an input/output interface of the chip system, and the processing unit may be a processor of the chip system, for example, a CPU.

The transceiver unit may be configured to perform a receiving and/or transmitting action performed by the second terminal apparatus in the first aspect or any possible design of the first aspect. The processing unit may be configured to perform an action other than receiving and transmitting performed by the second terminal apparatus in the first aspect or any possible design of the first aspect.

Optionally, the communication apparatus may include a transceiver module and/or a communication module.

Optionally, the communication apparatus may include a processor and/or a transceiver. The communication apparatus may further include a memory.

According to a fifth aspect, a communication system is provided. The communication system includes the communication apparatus shown in the third aspect and the communication apparatus shown in the fourth aspect.

According to a sixth aspect, a computer-readable storage medium is provided. The computer-readable storage medium is configured to store computer instructions or a computer program, and when the computer instructions or the computer program is run on a computer, the computer is enabled to perform the method according to the first aspect and the second aspect or any possible implementation in the first aspect and the second aspect.

According to a seventh aspect, a computer program product is provided. When the computer program product runs on a computer, the computer is enabled to perform the method according to the first aspect and the second aspect or any one of the possible designs of the first aspect and the second aspect.

According to an eighth aspect, a circuit is provided. The circuit is coupled to a memory, and the circuit is configured to perform the method according to the first aspect and the second aspect or any possible implementation in the first aspect and the second aspect. The circuit may include a chip circuit, a chip, a chip system, or the like.

For beneficial effect of the second aspect to the eighth aspect and the possible designs of the second aspect to the eighth aspect, refer to beneficial effect of the first aspect and the possible designs of the first aspect.

## BRIEF DESCRIPTION OF DRAWINGS

FIG. 1 is a schematic diagram of an architecture of a communication system according to an embodiment of this application;

FIG. 2 is a schematic diagram of an architecture of another communication system according to an embodiment of this application;

FIG. 3A is a schematic diagram of a correspondence between a physical slot and a logical slot according to an embodiment of this application;

FIG. 3B is a schematic diagram of a structure of an interlaced resource according to an embodiment of this application;

FIG. 4 is a schematic diagram of a location of a PSFCH resource according to an embodiment of this application;

FIG. 5 is a schematic diagram of a determining method of a PSFCH resource according to an embodiment of this application;

FIG. 6 is a schematic diagram of a structure of a communication apparatus according to an embodiment of this application;

FIG. 7 is a schematic diagram of a structure of another communication apparatus according to an embodiment of this application;

FIG. 8 is a schematic flowchart of a communication method according to an embodiment of this application;

FIG. 9 is a schematic diagram of a location of a feedback time unit according to an embodiment of this application;

FIG. 10 is a schematic diagram of a location of another feedback time unit according to an embodiment of this application;

FIG. 11 is a schematic diagram of a location of another feedback time unit according to an embodiment of this application;

FIG. 12 is a schematic diagram of a location of a second frequency domain resource according to an embodiment of this application;

FIG. 13 is a schematic diagram of a location of another second frequency domain resource according to an embodiment of this application;

FIG. 14 is a schematic diagram of locations of a first frequency domain resource and a second frequency domain resource according to an embodiment of this application; and

FIG. 15 is a schematic diagram of a location of a first frequency domain resource according to an embodiment of this application.

## DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.

(1) A terminal apparatus is, for example, a terminal device or a module, for example, a chip system, configured to implement a function of the terminal device, where the chip system may be disposed in the terminal device. The terminal device includes a device that provides data connectivity for a user, and specifically, includes a device that provides data connectivity for a user, or includes a device that provides data connectivity for a user. For example, the terminal device may include a handheld device with a wireless connection function, or a processing device connected to a wireless modem. The terminal device may communicate with a core network device by using a radio access network (radio access network, RAN), and exchange data with the RAN, or exchange a voice and data with the RAN. The terminal device may include user equipment (user equipment, UE), a wireless terminal device, a mobile terminal device, a device-to-device (device-to-device, D2D) terminal device, a vehicle to everything (vehicle to everything, V2X) terminal device, a machine-to-machine/machine type communications (machine-to-machine/machine-type communications, M2M/MTC) terminal device, and an internet of things (internet of things, IoT) terminal device. Most typically, the terminal apparatus may be a vehicle, a ship, or aircraft, or a terminal-type road side unit, or a communication module or a chip built in a vehicle or a road side unit. A network device in a V2X technology is a road side unit (road side unit, RSU). The RSU may be a fixed infrastructure entity that supports a V2X application, and may exchange a message with another entity that supports the V2X application by using a PC5 air interface.

In this embodiment of this application, communication between terminal apparatuses through a PC5 interface is supported, that is, transmission through a sidelink is supported.

As an example instead of a limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, shoes, and the like. The wearable device is a portable device that can be directly worn on the body or integrated into clothes or an accessory of a user. The wearable device is not only a hardware device, but also implements a powerful function through software support, data exchange, and cloud interaction. In a broad sense, a wearable intelligent device includes a full-featured and large-sized device that can implement all or a part of functions without depending on a smartphone, for example, a smart watch, smart glasses, or the like, and includes a device that is dedicated to only one type of application function and needs to collaboratively work with another device such as a smartphone, for example, various smart bands, a smart helmet, smart jewelry for monitoring a physical sign, and the like.

However, if the various terminal devices described above are located in a vehicle (for example, placed in the vehicle or mounted in the vehicle), the terminal devices may be all considered as in-vehicle terminal devices. For example, the in-vehicle terminal device is also referred to as an on board unit (on board unit, OBU).

In this embodiment of this application, the terminal device may further include a relay (relay). Alternatively, it may be understood that all devices that can perform data communication with the base station may be considered as terminal devices.

Optionally, a road side unit (road side unit, RSU) may be considered as a terminal apparatus.

In the following, a communication method provided in embodiments of this application may be described by using a terminal apparatus as an example. For example, a party (for example, a transmit node) that transmits sidelink data in sidelink communication may be referred to as a transmit end terminal apparatus, and a party (for example, a receive node) that receives the sidelink data may be referred to as a receive end terminal apparatus. For ease of description in this application, subsequently, a terminal apparatus (that is, a receive node of sidelink information) that receives the sidelink information is referred to as a first communication apparatus, and a terminal apparatus (that is, a transmit node of the sidelink information) that transmits the sidelink information is referred to as a second terminal apparatus. In other words, the first communication apparatus is a transmit node of sidelink feedback information, and the second communication apparatus is a receive node of the sidelink feedback information, where the sidelink feedback information may indicate a receiving status (including correct receiving or incorrect receiving) of the sidelink information by the first terminal apparatus. The sidelink feedback information may be used for data information (including hybrid automatic repeat request (hybrid automatic repeat request, HARQ) response feedback information, for example, an acknowledgment (acknowledge, ACK) or a negative acknowledgment (negative acknowledge, NACK), and may further include channel state information (channel state information, CSI) feedback information), and may further indicate at least one of the following information, for example, energy saving information and resource assistance information (including a recommended resource, a resource that is not recommended, resource collision, a resource reservation conflict, half duplex collision that has occurred in the past or is to occur in the future).

In this application, the sidelink information may include at least one information, for example, sidelink discovery information (the sidelink discovery information may be carried on a physical sidelink discovery channel (physical sidelink discovery channel, PSDCH) and/or a physical sidelink shared channel (physical sidelink shared channel, PSSCH)), sidelink control information (sidelink control information, SCI) (the SCI is carried on a physical sidelink control channel (physical sidelink control channel, PSCCH) and/or a PSSCH), sidelink data information (or referred to as data, sidelink data, and the like) (the sidelink data information is carried in a PSSCH), sidelink feedback information (carried in a PSFCH), sidelink synchronization information (carried in a sidelink-synchronization signal block (sidelink-synchronization signal block, S-SSB)), sidelink pilot information (reference signaling) (including a demodulation reference signal (demodulation reference signal, DMRS), a channel state information reference signal (channel state information reference signal, CSI-RS), a phase-tracking reference signal (phase-tracking reference signal, PTRS), a position reference signal (position reference signal, PRS), a discovery channel (discovery reference signal, DRS), or the like), or the like.

(2) A network device includes, for example, an access network (access network, AN) device, for example, a base station, and may be a device that communicates with a terminal apparatus over an air interface in an access network by using one or more cells. For example, a network device in a V2X technology is a road side unit (road side unit, RSU). The RSU may be a fixed infrastructure entity that supports a V2X application, and may exchange a message with another entity that supports the V2X application by using a Uu air interface. The network device may include an evolved universal terrestrial radio access network NodeB (E-UTRAN NodeB, eNB), a next-generation NodeB (next generation NodeB, gNB) in a 5th generation mobile communication technology (the 5th generation, 5G) NR system, or may include a central unit (central unit, CU) and a distributed unit (distributed unit, DU) in a cloud radio access network (cloud radio access network, Cloud RAN) system. This is not limited in embodiments of this application.

Because embodiments of this application mainly relate to an access network device, the network device described below is an access network device unless otherwise specified. In the following, a base station may be used to represent a network device and/or an access network device.

In embodiments of this application, an apparatus configured to implement a function of the network device may be a network device, or may be an apparatus, for example, a chip system, that can support the network device in implementing the function. The apparatus may be installed in the network device. In technical solutions provided in embodiments of this application, the technical solutions provided in embodiments of this application are described by using an example in which the apparatus for implementing a function of a network device is a network device.

(3) In this application, sidelink communication refers to communication between terminal apparatuses by using a sidelink.

The following uses V2X communication as an example to describe sidelink communication.

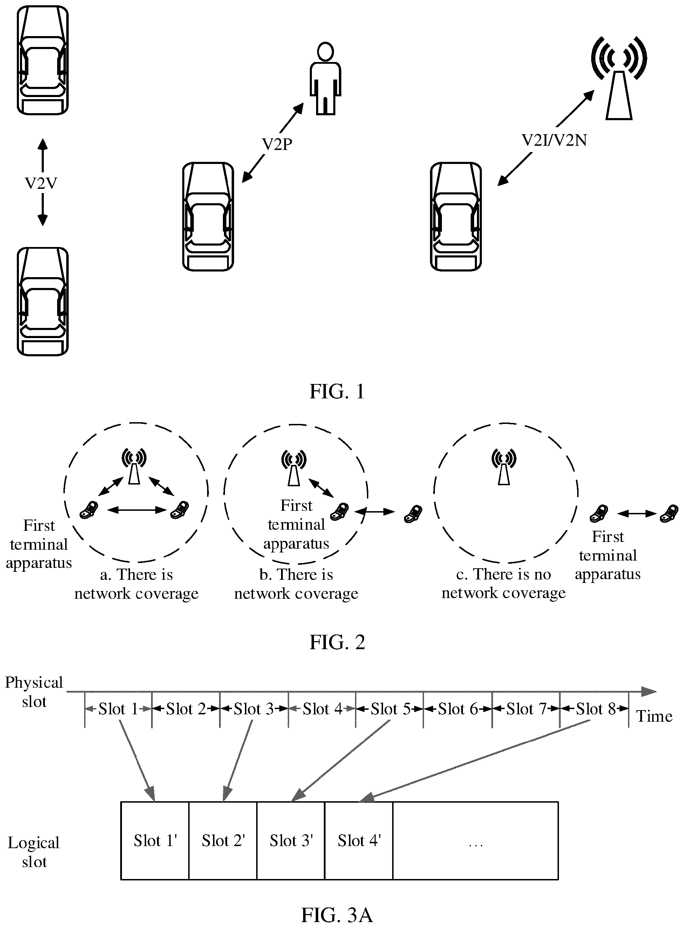

V2X communication is intended for a high-speed device represented by a vehicle, and is a basic technology and a key technology that are applied in a scenario that has a very high requirement on a communication delay in the future. Application fields of V2X communication include an intelligent vehicle, an automatic driving system, an intelligent transportation system, and the like. As shown in FIG. 1, a typical V2X communication scenario includes vehicle to vehicle (vehicle to vehicle, V2V) communication, vehicle to pedestrian (vehicle to pedestrian, V2P) communication, vehicle to infrastructure (vehicle to infrastructure, V2I) communication, or vehicle to network (vehicle to network, V2N) communication. For V2V communication, a first terminal apparatus and/or a second terminal apparatus may be a vehicle, an in-vehicle terminal apparatus located in a vehicle, or the like. For example, for V2P communication, one of the first terminal apparatus and the second terminal apparatus may be a vehicle, an in-vehicle terminal apparatus located in a vehicle, or the like, and the other may be a terminal apparatus carried by a pedestrian, for example, a mobile terminal, a wearable device, or the like. For V2P communication, one of the first terminal apparatus and the second terminal apparatus may be a vehicle, an in-vehicle terminal apparatus located in a vehicle, or the like, and the other may be infrastructure such as an RSU. For V2N communication, one of the first terminal apparatus and the second terminal apparatus may be a vehicle, an in-vehicle terminal apparatus located in a vehicle, or the like, and the other may be a base station.

For example, the second terminal apparatus is a transmit node of sidelink information. Through V2X communication, the second terminal apparatus may transmit, as sidelink data to a surrounding terminal apparatus, status information such as a location and a speed of the second terminal apparatus, or driving intention information such as turning, paralleling, or reversing, or information triggered by a periodic or non-periodic event. Similarly, the second terminal apparatus may further receive sidelink data from another surrounding terminal apparatus. In addition, the second terminal apparatus may further forward the sidelink data of the another terminal apparatus received by the second terminal apparatus. For example, the sidelink data and/or sidelink feedback information are/is carried in a PSSCH.

V2X communication can support a communication scenario with network coverage and a communication scenario without network coverage. In a scenario shown by numbers a and b in FIG. 2 in which there is network coverage for the first terminal apparatus, a resource allocation manner used when the first terminal apparatus performs transmitting by using V2X communication may be a network device scheduling mode. For example, a resource that is sent through network device scheduling and that is used by the terminal apparatus to perform sidelink communication may be referred to as a licensed resource or a licensed frequency band. In a scenario shown by a number c in FIG. 2 in which there is no network coverage for the first terminal apparatus, or there is network coverage for the first terminal apparatus but the first terminal apparatus does not use the network device scheduling mode, the first terminal apparatus may perform resource selection by itself, that is, select a resource used for sidelink communication from a resource pool. The resource may be referred to as an unlicensed resource or an unlicensed frequency band. It should be understood that the resource in this application may be replaced with a time-frequency resource and/or a time-frequency-code resource. In this application, the time-frequency resource includes a time domain resource and/or a frequency domain resource. The time-frequency-code resource includes at least one of a time domain resource, a frequency domain resource, and a code domain resource.

In a network coverage area, the terminal apparatus may obtain SL resource pool (resource pool) configuration information and/or SL bandwidth part (bandwidth part, BWP) configuration information by receiving a system information block (system information block, SIB), cell-specific (cell-specific) radio resource control (radio resource control, RRC) signaling, or terminal apparatus UE-specific (UE-specific) RRC signaling of the network device. Alternatively, the terminal apparatus may use preconfigured SL resource pool configuration information or SL BWP configuration information, for example, when there is no network coverage area. The SL resource pool configuration information includes resource pool resource information, and the resource pool resource information indicates an SL resource pool. A resource pool is a set of time-frequency resources used for sidelink communication between UE. The resource pool may include a code domain resource. A resource in the resource pool is used to include a resource for transmitting and receiving at least one of the following physical channels by the terminal apparatus, for example, a PSCCH, a PSSCH, a PSDCH, a PSFCH, a PSBCH, or the like. A service type carried by the PSSCH may include a unicast, multicast, and/or broadcast communication type. In time domain, the SL resource pool includes one or more time units. The time unit may be one or more symbols, one or more slots (slot), one or more mini-slots (mini-slot), one or more subframes, one or more frames, or the like. The one or more time units may be continuous in time, or may be discrete. It should be understood that time domain units are logically continuous in a resource pool.

As shown in FIG. 3A, a slot 1 to a slot 8 are continuous slots in time, and such slots are referred to as physical slots (physical slots). Physical slots including the slot 1, the slot 3, the slot 5, and the slot 8, are configured to belong to a resource pool. Because the slots included in the resource pool may be discontinuous in time, from a perspective of the resource pool, the slot 1, the slot 3, the slot 5, and the slot 8 in the physical slots correspond to a slot 1', a slot 2', a slot 3', and a slot 4' in the resource pool. Continuous slots (that is, the slot 1', the slot 2', the slot 3', and the slot 4') included in the resource pool are logically continuous slots in logic of the resource pool. Such slots that are logically continuous but not necessarily continuous in time are referred to as logical slots (logical slots). In frequency domain, the SL resource pool includes one or more frequency domain units. The frequency domain unit may be one resource element (resource element, RE), several REs, one resource block (resource block, RB), several RBs, one sub channel (sub channel), or several sub channels. A size of a sub channel indicates a quantity of one or more continuous (continuous) or interlaced (interlaced) RB included in one sub channel in frequency domain, and may be an integer, for example, 10, 12, 15, 20, 25, 50, or the like.

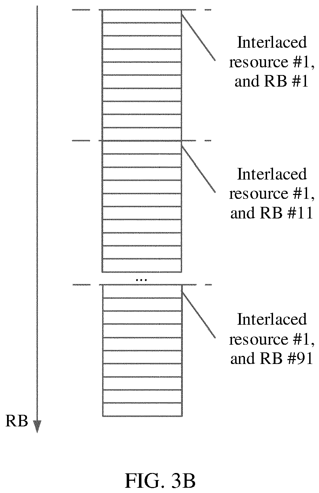

The interlaced RBs are one form of discrete RBs. For example, a plurality of RBs included in one channel, one BWP, one resource pool, or one sub channel in a resource pool being interlaced means that any two adjacent RBs included in the sub channel are separated by at least one RB that does not belong to the sub channel. Specifically, an interlaced resource (interlace) is defined as follows: One channel, one BWP, one resource pool, or one sub channel in a resource pool may include M interlaced resources, where a sequence number of an interlaced RB included in an $m^{th}$ interlaced resource ($m \in \{0, 1, ..., M - 1\}$) is $\{m, M + m, 2M + m, 3M + m, ... \}$. Generally, one interlaced resource includes at least 10 interlaced RBs. A quantity of interlaced RBs included in one interlaced resource may alternatively be less than 10. This is not limited herein. A value of $M$ is related to a sub carrier spacing (sub carrier spacing, SCS). For example, as shown in FIG. 3B, when a 15-kilohertz (kHz) SCS is used, a value of $M$ may be 10, and when a 30-kHz (kHz) SCS is used, a value of $M$ may be 5.

The SL resource pool configuration information may further include configuration information of the PSCCH, and the configuration information of the PSCCH includes a quantity of symbols occupied by the PSCCH in one slot and a quantity of RBs occupied by the PSCCH in one sub channel. The SL BWP configuration information may include SL resource pool information that is used to configure a quantity of resource pools included in the BWP. The SL BWP configuration information may include SL bandwidth information that indicates a bandwidth size for performing SL communication, for example, indicates that SL bandwidth is 20 megahertz (MHz).

The SL BWP configuration information may further include SL symbol information that indicates a start SL symbol location in one slot and a quantity of occupied continuous SL symbols. The SL BWP configuration information may further include information about a sub carrier spacing and a cyclic prefix of the SL, and the information indicates the sub carrier spacing and the cyclic prefix that are used for SL communication. The cyclic prefix indicates an extended cyclic prefix or a normal cyclic prefix. In a possible configuration, the SL BWP configuration information may further include the SL resource pool configuration information. In this application, unless a meaning of the time unit is specially specified, a slot is used for description, but a time unit is not limited to only a slot. Unless a meaning of the frequency domain unit is specially specified, a sub channel is used for description, but a frequency domain unit is not limited to only a sub channel.

In the unlicensed frequency band, a transmit end terminal apparatus accesses a signal in a contention manner, for example, in a channel access manner defined by the European Telecommunications Standards Institute (European Telecommunications Standards Institute, ETSI). The contention access manner includes load based equipment (load based equipment, LBE) and framework based equipment (frame based equipment, FBE).

For access of the unlicensed frequency band, both the LBE and the FBE require a terminal apparatus to perform listen before talk (listen before talk, LBT). For example, energy-based detection may be used when the unlicensed frequency band is accessed. In energy-based detection, an energy detection threshold (energy detection threshold) needs to be set. When channel energy detected by the terminal apparatus exceeds the energy detection threshold, it is determined that a channel is busy, and access to the channel is not allowed. When the detected channel energy is lower than the energy detection threshold for more than a period of time, for example, 34 microseconds ($\mu$s), backoff is allowed. A backoff window size is related to a service priority. A higher priority indicates a smaller backoff window. The terminal apparatus randomly selects a backoff value K from the backoff window to perform backoff. When the detected energy is less than the detection threshold for every 9 μs, a value of K is decreased by 1 until the backoff value K is decreased to 0. In this case, an LBT process is completed, and access to the channel for communication is allowed. A moment at which the backoff value K is decreased to 0 is a moment at which the terminal apparatus accesses the channel. In a process in which the backoff value K is decreased to 0, if energy detected by the terminal apparatus is greater than the detection threshold, the channel is busy, and backoff is stopped. In this case, the LBT process is not completed. When the detected energy is lower than the detection threshold for 34 μs again, backoff is restored, and backoff is restored according to a backoff value obtained when backoff is stopped last time.

In this application, a sidelink communication resource (or a resource for short) is a time-frequency resource in a resource pool used for sidelink communication, and a transmitting terminal apparatus may transmit sidelink information on the resource. One resource may carry one or more of reference signals, for example, a PSCCH, a PSSCH, a physical sidelink feedback channel (physical sidelink feedback channel, PSFCH), a demodulation reference signal (demodulation reference signal, DMRS), and the like. A time domain scheduling unit of the sidelink resource may be one slot, or may be one mini-slot. A frequency domain scheduling unit may be a channel, a sub channel (sub channel), or an interlaced resource, or may be one or more continuous (continuous) or interlaced RBs.

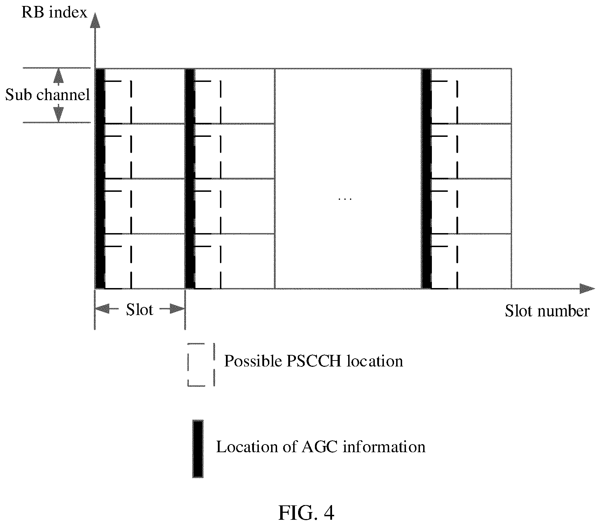

As shown in FIG. 4, a PSCCH may exist on each sub channel in each slot. For example, a time domain start location of a PSCCH is a start moment of a second symbol used for sidelink communication in each slot. In this application, the symbol may be an orthogonal frequency division multiplexing (orthogonal frequency division multiplexing, OFDM) symbol (symbol). A quantity of continuous symbols occupied by the PSCCH may be determined based on resource pool configuration information or SL BWP configuration information, for example, the quantity of the symbols do not exceed 14 symbols, for example, may be one, two, or three symbols. A frequency domain start location of the PSCCH is a physical resource block (physical resource block, PRB) with a smallest index (index) in each sub channel. A quantity of RBs occupied by the PSCCH may be determined by using the SL resource pool configuration information or the SL BWP configuration information, for example, the quantity of the RBs do not exceed a size of one channel or one sub channel. In addition, as shown in FIG. 4, optionally, each slot may further include a symbol used to carry automatic gain control (automatic gain control, AGC) information. For example, the symbol used to carry the AGC information is the first symbol in each slot.

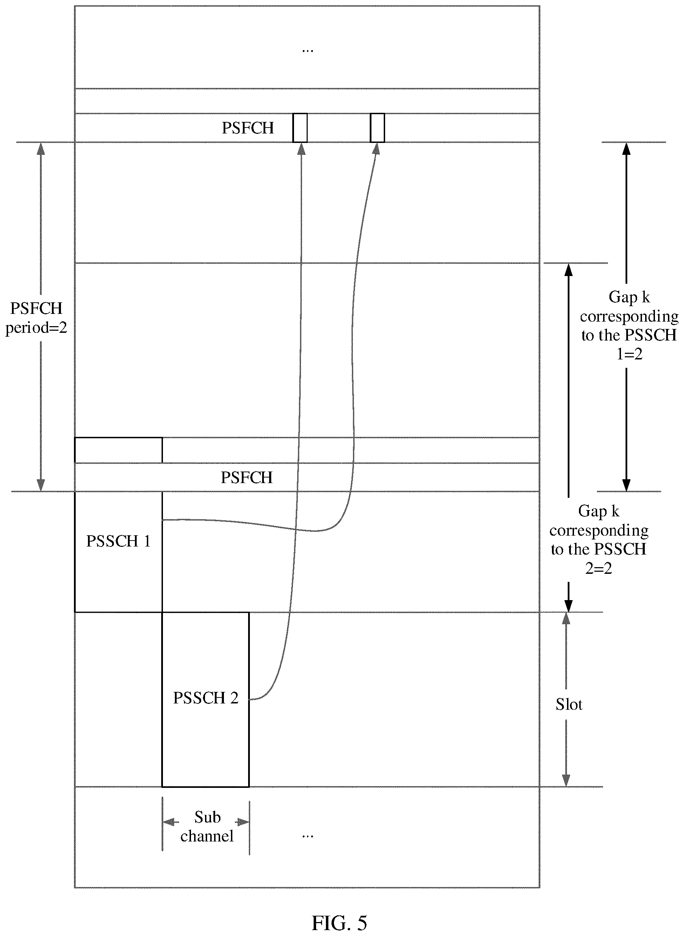

As described above, in an NR sidelink system, a PSFCH is used to carry HARQ feedback information, that is, carry ACK or NACK feedback information. Receive end UE of data feeds back, based on whether received data is correctly decoded, to transmit end UE of the data. With reference to FIG. 5, the following describes a manner of determining a time-frequency resource of a PSFCH in current NR releases (releases) 16 and 17.

For example, the first terminal apparatus receives data information of the second terminal, and the first terminal apparatus transmits feedback information to the second terminal in response to the received data information. The first terminal apparatus determines a resource for transmitting sidelink feedback information, namely, a PSFCH resource, and the resource is jointly determined by the following several parameters:

(1) resource configuration information of a resource pool, where the resource configuration information includes configuration information of a quantity of sub channels included in the resource pool, and configuration information of a quantity of RBs included in one sub channel;
(2) a slot and a sub channel that are allocated to the received data information of the second terminal, namely, a time domain resource and a frequency domain resource used for transmitting the data information;
(3) a time domain period (period) of a PSFCH resource in the resource pool, namely, a quantity of slots in which there is one PSFCH, where for example, PSFCH Period N=2 (N may alternatively be equal to 0, 1, or 4) in FIG. 5 indicates that there is one PSFCH resource in every two slots, the PSFCH resource may be located in a penultimate symbol and a last third symbol of one SL slot, and the penultimate symbol may be used by a receive end of the PSFCH to perform AGC training;
(4) a frequency domain resource of the PSFCH resource in the resource pool, namely, an RB in the resource that can be used for PSFCH transmission, where PSFCH transmission includes but is not limited to a HARQ acknowledgment feedback (namely, a feedback of an ACK or a NACK);
(5) a code domain resource of the PSFCH resource in the resource pool, namely, a quantity of different PSFCH sequences that can be multiplexed on one RB, which is specifically reflected in a cyclic shift (cyclic shift, CS) value for generating a PSFCH sequence, where two different CS values may be a pair (pair), the pair of CSs are an ACK sequence and a NACK sequence, and the PSFCH sequence may be a ZC sequence; and
(6) a time domain gap (gap) between the PSFCH and the PSSCH, where PSFCH gap k=2 (k may alternatively be equal to 3) in FIG. 5 is a delay required for the first terminal apparatus to process PSSCH decoding and determine content carried by the PSFCH.

Specifically, in the resource pool, a mapping relationship between a time-frequency resource for receiving the PSSCH and a corresponding PSFCH resource is determined in the following manner: For a PSFCH time domain period, all PSSCH time-frequency resources that satisfy a PSFCH gap and that can be mapped to a PSFCH resource (the PSFCH resource is a slot that is the first slot in which a PSFCH resource exists and that is in a PSFCH slot and a PSSCH slot whose gap is not less than k slots (the PSFCH gap)) in the PSFCH time domain period are sorted first in time domain (for example, slots are sorted in ascending order of indexes) and then in frequency domain (for example, sub channels are sorted in ascending order of indexes). PSFCH resources are sorted first in frequency domain and then in code domain in a slot in which a PSFCH in the PSFCH time domain period is located. The sorted PSSCH resources and the sorted PSFCH resources are mapped, that is, any PSSCH time-frequency resource corresponds to a unique PSFCH time-frequency-code resource. For example, as shown in FIG. 5, locations of PSFCH resources respectively corresponding to a PSSCH 1 and a PSSCH 2 are indicated by using arrows in FIG. 5, and the PSFCH resources respectively corresponding to the PSSCH 1 and the PSSCH 2 occupy only one RB in frequency domain.

According to national and regional regulations on use of unlicensed frequency bands, occupied channel bandwidth (occupied channel bandwidth, OCB) has to be between 80% and 100% of nominal channel bandwidth, and this requirement is referred to as an OCB requirement. The nominal channel bandwidth (nominal channel bandwidth) is a widest frequency band allocated to a single channel, including a guard band. The occupied channel bandwidth includes 99% of signal power. In a 5 GHz (GHz) frequency band, nominal channel bandwidth of a single operating channel should be 20 MHz (MHz). In a case of a device smart antenna system that has a plurality of transmit chains, each transmit chain of the communication system should meet the OCB requirement. In a millimeter-wave band, for example, a 60 GHz band, according to the OCB requirement, 75% or more of nominal channel bandwidth may be required. The occupied channel bandwidth may vary with time and/or payload.

A receive node of data feeds back, based on whether received data is correctly decoded, to a transmit node of the data, where the data is carried in a physical sidelink shared channel (physical sidelink shared channel, PSSCH). However, in an unlicensed frequency band, a method for determining a time-frequency resource of a PSFCH in current NR releases (releases) 16 and 17 cannot meet the OCB requirement, and therefore, the unlicensed frequency band cannot be occupied for transmitting.

It can be learned from FIG. 5 that a current manner of determining a PSFCH resource cannot meet an OCB requirement in an access mechanism of an unlicensed frequency band. As a result, the first terminal apparatus cannot transmit a PSFCH on the unlicensed frequency band based on the PSFCH resource. Therefore, the current manner of transmitting a PSFCH is not applicable to the unlicensed frequency band.

Embodiments of this application provide a communication method, to provide a PSFCH transmitting manner applicable to an unlicensed frequency band. The communication method may be implemented by a first communication apparatus and/or a second communication apparatus.

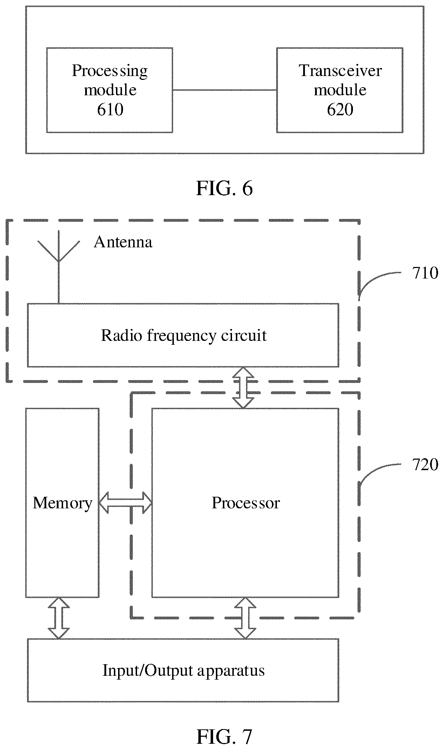

With reference to FIG. 6 and FIG. 7, the following describes possible structures of a first terminal apparatus and/or a second terminal apparatus provided in embodiments of this application.

For example, FIG. 6 is a possible schematic diagram of a structure of the first terminal apparatus and/or the second terminal apparatus. The structure may include a processing module 610 and a transceiver module 620. For example, the structure shown in FIG. 6 may be a terminal device, or may be a chip used in a terminal device, or another combined device, member, or component having a function of a terminal device shown in this application. When the structure is the terminal device, the transceiver module 620 may be a transceiver, and the transceiver may include an antenna, a radio frequency circuit, and the like; and the processing module 610 may be a processor, for example, a baseband processor, and the baseband processor may include one or more central processing units (central processing units, CPU). When the structure is the member having the function of the terminal device shown in this application, the transceiver module 620 may be a radio frequency unit, and the processing module 610 may be a processor, for example, a baseband processor. When the structure is a chip system, the transceiver module 620 may be an input/output interface of a chip, for example, a baseband chip, and the processing module 610 may be a processor of the chip system, and may include one or more central processing units. It should be understood that the processing module 610 in this embodiment of this application may be implemented by using a processor or a processor-related circuit component, and the transceiver module 620 may be implemented by using a transceiver or a transceiver-related circuit component.

For example, the processing module 610 may be configured to perform all operations other than transmitting and receiving operations performed by the first terminal apparatus and/or the second terminal apparatus in any embodiment of this application, for example, a processing operation, and/or another process configured to support the technology described in this specification, for example, generate a message, information, and/or signaling sent by the transceiver module 620, and process a message, information, and/or signaling received by the transceiver module 620. The transceiver module 620 may be configured to perform all receiving and transmitting operations performed by the first terminal apparatus and/or the second terminal apparatus in any embodiment of this application, and/or another process of the technology described in this specification, for example, data transmitting and/or receiving.

In addition, the transceiver module 620 may be a functional module, and the functional module can complete both a transmitting operation and a receiving operation. For example, the transceiver module 620 may be configured to perform all transmitting operations and receiving operations performed by a relay node and/or a remote node. For example, when performing a transmitting operation, the transceiver module 620 may be considered as a transmitting module, and when performing a receiving operation, the transceiver module 620 may be considered as a receiving module. Alternatively, the transceiver module 620 may be two functional modules, and the transceiver module 620 may be considered as a general term of the two functional modules. The two functional modules are a transmitting module and a receiving module, and the transmitting module is configured to complete a transmitting operation, for example, the transmitting module may be configured to perform all transmitting operations performed by the first terminal apparatus and/or the second terminal apparatus; and the receiving module is configured to complete a receiving operation, and the receiving module may be configured to perform all receiving operations performed by the first terminal apparatus and/or the second terminal apparatus.

FIG. 7 is a schematic diagram of a structure of another terminal apparatus, and the terminal apparatus is configured to perform actions performed by the first terminal apparatus and/or the second terminal apparatus according to an embodiment of this application, for ease of understanding and illustration. As shown in FIG. 7, the terminal apparatus may include a processor, a memory, a radio frequency circuit, an antenna, and/or an input/output apparatus. The processor is mainly configured to: process a communication protocol and communication data, control the terminal apparatus, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and transmit a radio frequency signal in a form of an electromagnetic wave. The input/output apparatus, for example, a touchscreen, a display, a keyboard, or the like, is mainly configured to: receive data input by a user and output data to the user. It should be noted that some types of terminal apparatuses may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then transmits the radio frequency signal to the outside in a form of an electromagnetic wave through the antenna. When data is sent to the terminal apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 7 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a receiving and transmitting function may be considered as a transceiver unit of the terminal apparatus. The transceiver unit may be a functional unit, and the functional unit can implement a transmitting function and a receiving function. Alternatively, the transceiver unit may include two functional units: a receiving unit that can implement a receiving function and a transmitting unit that can implement a transmitting function. A processor having a processing function may be considered as a processing unit of the terminal apparatus. As shown in FIG. 7, the terminal apparatus includes a transceiver unit 710 and a processing unit 720. The transceiver unit may also be referred to as a transceiver, a transceiver device, a transceiver apparatus, or the like. The processing unit may also be referred to as a processor, a processing board, a processing module, a processing apparatus, or the like. Optionally, a device that is in the transceiver unit 710 and that is configured to implement a receiving function may be considered as a receiving unit, and a device that is in the transceiver unit 710 and that is configured to implement a transmitting function may be considered as a transmitting unit. That is, the transceiver unit 710 includes the receiving unit and the transmitting unit. The transceiver unit sometimes may also be referred to as a transceiver machine, a transceiver, a transceiver circuit, or the like. The receiving unit sometimes may also be referred to as a receiver machine, a receiver, a receive circuit, or the like. The transmitting unit sometimes may also be referred to as a transmitter machine, a transmitter, a transmit circuit, or the like.

It should be understood that the transceiver unit 710 may correspond to the transceiver module 620. In other words, the transceiver module 620 may be implemented by the transceiver unit 710. The transceiver unit 710 is configured to perform a transmitting operation and a receiving operation of the first terminal apparatus and/or the second terminal apparatus in embodiments shown in this application, and/or is configured to support another process of the technology described in this specification. The processing unit 720 may correspond to the processing module 610. In other words, the processing module 610 may be implemented by the processing unit 720. The processing unit 720 is configured to perform other operations of the first terminal apparatus and/or the second terminal apparatus in the embodiments shown in this application except receiving and transmitting operations, for example, configured to perform all operations performed by the first terminal apparatus and/or the second terminal apparatus in embodiments shown in this application except receiving and transmitting, and/or configured to support another process of the technology described in this specification.

In addition, the structure shown in FIG. 6 and/or FIG. 7 may be further configured to implement a network device or a component of the network device. The network device is, for example, a base station, a CU, or a DU. For example, the processing module 610 shown in FIG. 6 and/or the processing unit 720 shown in FIG. 7 may be configured to implement processing steps performed by the base station and/or operations other than receiving and transmitting performed by the base station in the communication method provided in embodiments of this application. The transceiver module 620 shown in FIG. 6 and/or the transceiver unit 710 shown in FIG. 7 may be configured to implement a receiving operation and/or a transmitting operation performed by the base station in the communication method provided in embodiments of this application. If the structure shown in FIG. 7 is used to implement the network device, the structure may not include an input/output apparatus. For ease of description in this application, the network device or a component of the network device may be referred to as a third communication apparatus.

It should be understood that when the first terminal apparatus and/or the second terminal apparatus are/is implemented by using the structure shown in FIG. 6 and/or FIG. 7, receiving and transmitting actions performed by the first terminal apparatus and/or the second terminal apparatus in the communication method provided in embodiments of this application may be performed by the transceiver module 620 shown in FIG. 6 and/or the transceiver unit 710 shown in FIG. 7. In the communication method provided in embodiments of this application, processing actions performed by the first terminal apparatus and/or the second terminal apparatus, and actions other than receiving and transmitting actions may be performed by the processing module 610 shown in FIG. 6 and/or the processing unit 720 shown in FIG. 7. When the network device or the component in the network device is implemented by using the structure shown in FIG. 6 and/or FIG. 7, receiving and transmitting actions performed by the network device in the communication method provided in embodiments of this application may be performed by the transceiver module 620 shown in FIG. 6 and/or the transceiver unit 710 shown in FIG. 7. In the communication method provided in embodiments of this application, a processing action performed by the network device and actions other than receiving action and transmitting actions may be performed by the processing module 610 shown in FIG. 6 and/or the processing unit 720 shown in FIG. 7.

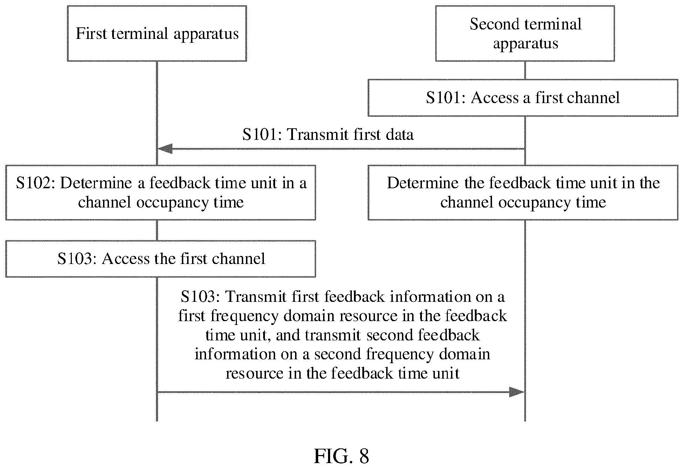

As shown in FIG. 8, the communication method provided in this embodiment of this application may include the following steps shown in S101 to S103.

S101: The second terminal apparatus accesses a first channel, and transmits first data.

Optionally, accessing a channel in this application means that the terminal apparatus completes LBT on the channel, or LBT succeeds. For example, in an LBT process of the terminal apparatus in the channel, a backoff value K is decreased to 0.

Correspondingly, the first terminal apparatus receives the first data from the second terminal apparatus.

Optionally, the first data is carried on a PSSCH.

For example, the second terminal apparatus may transmit sidelink control information by using the PSSCH after accessing the first channel, and the sidelink control information may be used to schedule the first data. After detecting the sidelink control information from the second terminal apparatus, the first terminal apparatus receives the first data based on the sidelink control information.

For example, when the second communication apparatus uses the structure shown in FIG. 6, S101 may be performed by using the transceiver module 620. When the second communication apparatus uses the structure shown in FIG. 7, S101 may be performed by using the transceiver unit 710.

S102: The first terminal apparatus determines a feedback time unit in a channel occupancy time, where the feedback time unit corresponds to the first data. In this application, the feedback time unit corresponding to the first data means that the feedback time unit may include a feedback resource used to carry feedback information corresponding to the first data, or in other words, some or all resources in the feedback time unit may be used to transmit feedback information corresponding to the first data, and HARQ response feedback for the first data is implemented. In this application, the feedback resource is a time-frequency resource that can be used by the terminal apparatus to transmit the feedback information.

It should be understood that the channel occupancy time herein may be determined by the second terminal apparatus. Specifically, the channel occupancy time may be a maximum channel occupancy time (maximum channel occupancy time, MCOT) determined by the second terminal apparatus, and the MCOT is a maximum time in which the second terminal apparatus can occupy the first channel. Alternatively, the channel occupancy time is a time in which the second terminal apparatus actually occupies the first channel, and is referred to as a channel occupancy time (channel occupancy time, COT). In this case, the channel occupancy time may be less than or equal to the maximum occupancy time.

Optionally, the second terminal apparatus may transmit indication information of the channel occupancy time to the first terminal apparatus, and the first terminal apparatus determines the channel occupancy time based on the indication information.

For example, after accessing the first channel, the second terminal apparatus determines, based on the MCOT, a value less than the MCOT as the COT, and indicates the COT to the first terminal apparatus by using the sidelink control information, a media access control (media access control, MAC) control element (control element, CE), or PC5 RRC signaling, including indicating a start location (for example, a slot or a symbol in which the COT starts) of the COT and/or duration (a unit may be ms, a slot, or a symbol) of the COT, and the first terminal apparatus uses the COT as the channel occupancy time. Alternatively, after accessing the channel, the second terminal apparatus indicates the MCOT to the first terminal apparatus by using the sidelink control information, a MAC control element, or sidelink RRC information, and the first terminal apparatus uses the MCOT as the channel occupancy time.

S102 may alternatively be replaced with the following: The first terminal apparatus determines a feedback time unit in the MCOT, or the first terminal apparatus determines a feedback time unit in the COT.

Optionally, the MCOT depends on a channel access priority class (channel access priority class), and the channel access priority class is determined by the terminal apparatus based on a service type or a quality of service class of a service of the to-be-transmitted data. A correspondence between a channel access priority class and an MCOT is shown in Table 1.

**Table 1**

| Channel access priority class | MCOT |
|---|---|
| 1 | 2 milliseconds (ms) |
| 2 | 4 milliseconds (ms) |
| 3 | 6 ms or 10 ms |
| 4 | 6 ms or 10 ms |

Then, the first terminal apparatus may determine, based on the channel occupancy time and sub carrier spacing information, a quantity of slots included in the channel occupancy time. For example, the quantity of slots satisfies:

$$N_{slot} = \mathrm{T} \times 2^{\mu}$$

$N_{slot}$ is the quantity of slots, T is the channel occupancy time, T=MCOT, or T=COT, and $\mu$ is the sub carrier spacing information. That is, time in the channel occupancy time may be represented as $t_k^{COT}$ $(0 \leq k < N_{slot})$.

Optionally, a correspondence between the sub carrier spacing information and a sub carrier spacing $\Delta f$ is shown in Table 2.

**Table 2**

| $\mu$ | $\Delta f = 2^{\mu} \cdot 15$ [kilohertz (kHz)] |
|---|---|
| 0 | 15 |
| 1 | 30 |
| 2 | 60 |
| 3 | 120 |
| 4 | 240 |
| 5 | 480 |
| 6 | 960 |

Optionally, the first terminal apparatus may determine the feedback time unit from a time unit set in the channel occupancy time. The time unit set may include at least one time unit, and the time unit in the time unit set includes a feedback resource. The feedback time unit may belong to an SL resource pool.

It should be understood that, in this application, an example in which one time unit is one slot is used for description. In actual application, the time unit may alternatively be defined as n slots, where n is greater than 0.

The following describes a manner of determining the time unit set with reference to the accompanying drawings.

Manner 1

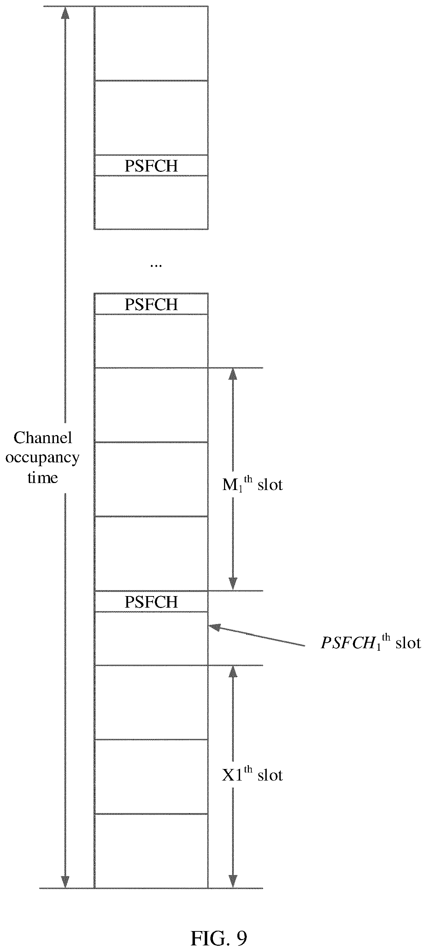

As shown in FIG. 9, a start slot of a time unit set in a COT or an MCOT may be defined as a $PSFCH_1{}^{th}$ slot in

a channel occupancy time, and the slot may be denoted as $t_{PSFCH_1}^{COT}$. A time domain gap between the $PSFCH_1$th slot

and a start location of the channel occupancy time is $X_1$ (or denoted as $X_{offset}^1$) slots. The time domain gap herein refers to a quantity of slots between the $PSFCH_1$th slot and the start location of the channel occupancy time.

Optionally, in this manner, a location of a $PSFCH_1$ in one COT or MCOT may be predefined, and that the location is predefined includes that the location is defined in a communication standard protocol or a communication specification, and does not need to be obtained by using signaling or configuration or through calculation. For example, a value of $X_1$ is a positive integer that does not exceed a total quantity of slots corresponding to COT duration, for example, 0, 1, 2, 3, 4, 5, or 6. Optionally, $X_1$ may be preconfigured, or $X_1$ is indicated or configured by the network device for the first terminal apparatus by using downlink control information (downlink control information, DCI), RRC signaling, SIB information, or MIB information, or $X_1$ is indicated or configured by the second terminal apparatus for the first terminal apparatus by using SCI or PC5 RRC signaling.

In addition, in this manner, a time domain gap between every two adjacent time units in the time unit set is $M_1$ slots, as shown in FIG. 9. A value of $M_1$ may be predefined, for example, may be 1, 2, 3, or 4, or $M_1$ may be a preconfigured value, or $M_1$ may be indicated or configured by the network device for the first terminal apparatus by using the DCI, the RRC signaling, the SIB information, or the MIB information, or $M_1$ may be indicated or configured by the second terminal apparatus for the first terminal apparatus by using the SCI or the PC5 RRC signaling. The adjacent time units in the time unit set are two logically adjacent time units in the time unit set, and the two time units are not necessarily physically adjacent. For example, as shown in FIG. 9, the two adjacent time units in the time unit set include $M_1$ slots that do not include a feedback resource, that is, $M_1$ is a time domain gap between the two adjacent time units.

Therefore, the first terminal apparatus may determine that, in the channel occupancy time, a number of another slot in the time unit set other than the $PSFCH_1$th slot is $t_{PSFCH_1 + i \times (M_1+1)}^{COT}$, where $i = 1, 2, 3, \ldots, \left\lfloor \frac{N_{slot} - PSFCH_1}{M_1 + 1} \right\rfloor$.

In addition, the last slot included in the time unit set may further be defined as a $PSFCH_2$th slot in the channel occupancy time. A time domain gap between the $PSFCH_2$th slot and an end location of the channel occupancy time is $X_2$ (or denoted as $X_{offset}^2$) slots.

A location of a $PSFCH_2$ may be predefined. For example, a value of $X_2$ is $N_{slot}$, $N_{slot}$ - 1, $N_{slot}$ - 2, $N_{slot}$ - 3, or $N_{slot}$ - 4, or $X_2$ is a preconfigured value, or $X_2$ is indicated or configured by the network device for the first terminal apparatus by using the DCI, the RRC signaling, the SIB information, or the MIB information, or $X_2$ is indicated or configured by the second terminal apparatus for the first terminal apparatus by using the SCI or the PC5 RRC signaling.

Therefore, the first terminal apparatus may determine that, in the channel occupancy time, a number of another slot in the time unit set other than the $PSFCH_2$th slot is $t_{PSFCH_2 - i \times (M_1+1)}^{COT}$, where $i = 1, 2, 3, \ldots, \left\lfloor \frac{N_{slot} - PSFCH_2}{M_1 + 1} \right\rfloor$.

Manner 2

The time unit included in the time unit set may be indicated or configured by the network device for the first terminal apparatus by using the DCI, the RRC signaling, the SIB information, or the MIB information, or may be indicated or configured by the second terminal apparatus for the first terminal apparatus by using the SCI or the PC5 RRC signaling.

For example, the first terminal apparatus may receive first indication information from the network device or the second terminal apparatus, and the first indication information may indicate the time unit included in the time unit set.

Specifically, the first indication information may include a bitmap (bitmap). For example, a time unit is a slot. A PSFCH resource pattern (pattern) within the channel occupancy time may be defined, and the pattern is represented by using the bitmap.

For example, the bitmap may be represented as $(b_0, b_1, \ldots, b_{L_{bitmap}-1})$, where $L_{bitmap}$ is a length of the bitmap. A value of $L_{bitmap}$ may be predefined, or is a preconfigured value, or is indicated or configured by the network device for the first terminal apparatus by using the DCI, the RRC signaling, the SIB information, or the MIB information, or is indicated or configured by the second terminal apparatus for the first terminal apparatus by using the SCI or the PC5 RRC signaling.

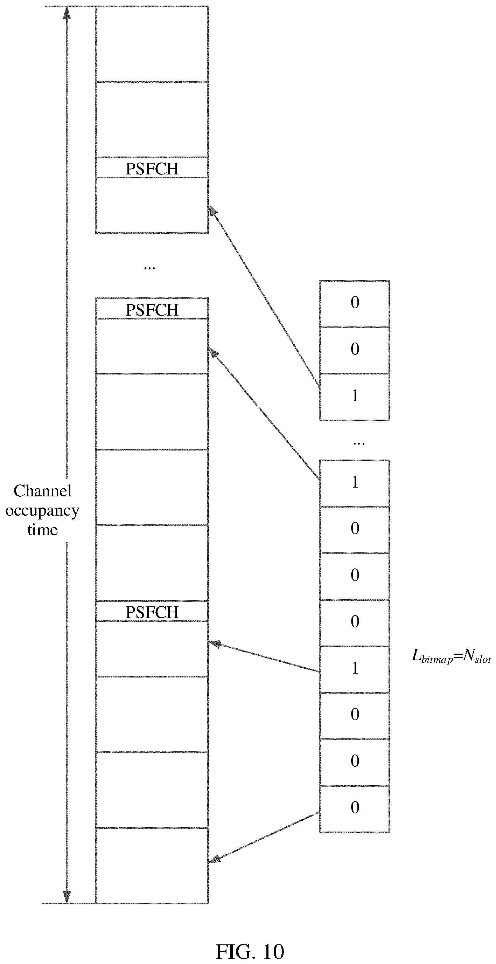

Optionally, in a case, $L_{bitmap} = N_{slot}$. As shown in FIG. 10, each bit value in the bitmap indicates whether a slot in the channel occupancy time is a time unit included in the time unit set.

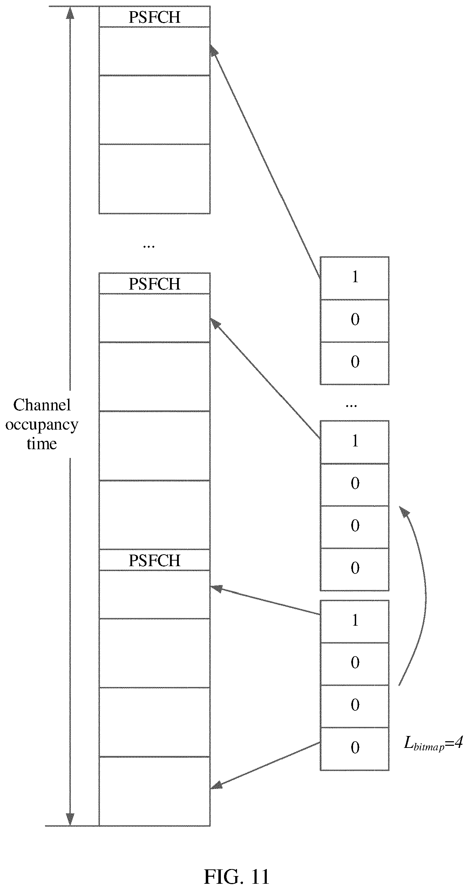

Alternatively, $L_{bitmap}$ is another integer value, for example, $N_{slot} \bmod L_{bitmap} = 0$ is satisfied, that is, $N_{slot}$ is an

integer multiple of $L_{bitmap}$. In this case, when $b_{k'} = 1$, a slot whose number is $t_k^{COT}$ $(0 \leq k < N_{slot})$ belongs to the time unit set, where $b_{k'}$ is a value of a $k'^{th}$ bit in the bitmap, and $k' = k \bmod L_{bitmap}$. As shown in FIG. 11, a size of a bitmap is $L_{bitmap} = 4$, where $b_3 = 1$, $b_0 = b_1 = b_2 = 0$ (that is, a bitmap of "0001"), and $N_{slot} \bmod 4 = 0$. In this case, slots whose numbers are $t_3^{COT}$, $t_7^{COT}$, ..., and $t_{N_{slot}-1}^{COT}$ belong to the time unit set.

Manner 3

The first terminal apparatus may determine the time unit set in a manner of predefining or preconfiguring the time unit included in the time unit set.

For example, the time unit in the time unit set is predefined as the last slot in the channel occupancy time or another slot. If the time unit in the time unit set is the last slot in the channel occupancy time, the feedback time unit is the slot.

Manner 4

The first terminal apparatus may determine the time unit set based on a length of the channel occupancy time.

For example, when the channel occupancy time is less than or equal to a time threshold, the time unit in the time unit set is the last slot in the channel occupancy time or another slot by default. If the time unit in the time unit set is the last slot in the channel occupancy time, the feedback time unit is the slot.

The threshold may be a time length, for example, X ms, or the threshold may be a length of X' slots. Optionally, a value or values of X and/or X' may be predefined, or may be preconfigured values, or may be indicated or configured for the first terminal apparatus by the network device by using the DCI, the RRC signaling, the SIB information, or the MIB information, or may be indicated or configured for the first terminal apparatus by the second terminal apparatus by using the SCI or the PC5 RRC signaling.

Optionally, for another example, when the channel occupancy time is greater than a time threshold, the time unit in the default time unit set includes the last slot in the channel occupancy time and an odd-numbered or even-numbered slot in the middle.

It should be understood that Manner 1 to Manner 4 are merely examples for description, and should not be understood as all implementations of determining the time unit set. For example, in actual application, the foregoing Manner 1 to Manner 4 may further be implemented in combination with each other. For example, in Manner 4, when the channel occupancy time is less than the time threshold, the time unit in the time unit set is the last slot in the channel occupancy time by default. When the channel occupancy time is greater than or equal to the time threshold, the time unit in the time unit set may be determined in any one of Manner 1 to Manner 3 or Manner 4.

Optionally, after determining the time unit in the time unit set, the first terminal apparatus may determine the feedback time unit based on a time-frequency resource carrying the first data. For example, after it is determined that the time unit set includes a plurality of time units, a time unit that meets a requirement of a time domain gap between the PSFCH and the PSSCH is determined as the feedback time unit. For a specific manner, refer to the description of FIG. 5 in this application. Details are not described herein again. A unit of the time domain gap may be a slot. For example, the time domain gap is 1, 2, or 3 slots. A value of the time domain gap may be predefined, or may be a preconfigured value, or may be indicated or configured for the first terminal apparatus by the network device by using the DCI, the RRC signaling, the SIB information, or the MIB information, or may be indicated or configured for the first terminal apparatus by the second terminal apparatus by using the SCI or the PC5 RRC signaling.

It should be understood that the feedback time unit and/or the feedback time unit set may alternatively be periodically configured by using SL BWP configuration information and/or SL resource pool configuration information.

For example, when the first communication apparatus uses the structure shown in FIG. 6, S102 may be performed by the processing module 610. When the first communication apparatus uses the structure shown in FIG. 7, S102 may be performed by the processing unit 720.

Similar to S102, the second terminal apparatus may determine a feedback time unit in the channel occupancy time. The feedback time unit corresponds to the first data. Alternatively, the second terminal apparatus determines a feedback time unit in the MCOT, or the second terminal apparatus determines a feedback time unit in the COT.

It should be understood that an execution time sequence of determining the feedback time unit in the channel occupancy time by the second terminal apparatus and an execution time sequence of S102 are not limited in this application. For example, the second terminal apparatus may perform a determining action of the feedback time unit after transmitting the first data, and the first terminal apparatus performs S102 after receiving the first data. Other than this, there is no necessary relationship between an execution sequence of the two actions. For example, before receiving the first feedback information and/or the second feedback information, the second terminal apparatus determines the feedback time unit corresponding to the first data, to correctly receive the feedback information.

The channel occupancy time is a maximum channel occupancy time determined by the second terminal apparatus, or is less than a maximum channel occupancy time determined by the second terminal apparatus. Optionally, the channel occupancy time may be determined by the second terminal apparatus. For details, refer to the description in S102. In this application, the second terminal apparatus may transmit the indication information of the channel occupancy time to the first terminal apparatus, to indicate the channel occupancy time determined by the second terminal apparatus.

Optionally, the first terminal apparatus may determine the feedback time unit from a time unit set in the channel occupancy time. For a manner of determining the time unit set, refer to the manner of determining the time unit set in S102.

For example, corresponding to Manner 1 of determining the time unit set in S102, for the second terminal apparatus, at least one of $X_1$, $X_2$, and $M_1$ may be preconfigured, or $X_1$ may be indicated or configured by the network device for the second terminal apparatus by using the DCI, the RRC signaling, the SIB information, or the MIB information, or at least one of $X_1$, $X_2$, and $M_1$ may be determined by the second terminal apparatus and indicated or configured for the first terminal apparatus by using the SCI or the PC5 RRC signaling. For meanings of $X_1$, $X_2$, and $M_1$, refer to the description of Manner 1 in S102.

For another example, corresponding to Manner 2 of determining the time unit set in S102, the time unit included in the time unit set may be indicated or configured by the network device for the second terminal apparatus by using the DCI, the RRC signaling, the SIB information, or the MIB information, or may be indicated or configured by the second terminal apparatus for the first terminal apparatus by using the SCI or the PC5 RRC signaling. For example, the second terminal apparatus may receive second indication information from the network device, and determine the feedback time unit from the time units included in the channel occupancy time based on the second indication information. For example, the second indication information is a bitmap. For a manner of indicating the time unit set by using the bitmap, refer to the description in Manner 2.

For another example, corresponding to Manner 3 of determining the time unit set in S102, the second communication apparatus may determine the time unit set in a manner of predefining or preconfiguring a time unit included in the time unit set.

For another example, corresponding to Manner 4 of determining the time unit set in S102, the second communication apparatus may determine the time unit set based on the length of the channel occupancy time. For example, when the channel occupancy time is less than or equal to the time threshold, the second terminal apparatus considers by default that the time unit in the time unit set is the last slot in the channel occupancy time.

Optionally, after determining the time unit in the time unit set, the second terminal apparatus may determine the feedback time unit based on the time-frequency resource carrying the first data. For example, the second terminal apparatus may determine, as the feedback time unit, a time unit that meets a requirement of a time domain gap between the PSFCH and the PSSCH.

For a manner of determining the feedback time unit by the second terminal apparatus, refer to S102 in which the first terminal apparatus determines the time unit set, and transmits the first indication information to the first terminal apparatus. The first indication information may indicate the time unit included in the time unit set.

It should be understood that the second terminal apparatus may further obtain a periodically configured feedback time unit and/or time unit set based on the SL BWP configuration information and/or the SL resource pool configuration information.

Optionally, the determined feedback time unit determined by the second terminal apparatus is the same as the feedback time unit determined by the first terminal apparatus in S102.

For example, when the second communication apparatus uses the structure shown in FIG. 6, an action of determining the feedback time unit and/or the time unit set may be performed by the processing module 610. When the second communication apparatus uses the structure shown in FIG. 7, the action of determining the feedback time unit and/or the time unit set may be performed by the processing unit 720.

S103: The first terminal apparatus accesses the first channel, transmits the first feedback information on a first frequency domain resource in the feedback time unit, and transmits the second feedback information on a second frequency domain resource in the feedback time unit. The first frequency domain resource and the second frequency domain resource do not overlap, or the first frequency domain resource and the second frequency domain resource do not include a same RB.

The first frequency domain resource and the second frequency domain resource belong to the first channel, and the first frequency domain resource is determined based on the time-frequency resource carrying the first data.

The first feedback information is valid feedback information for the first data, includes an ACK or a NACK, and indicates whether the first data is correctly received. Optionally, the first feedback information may further include but is not limited to CSI feedback information that indicates a channel state, and includes pre-coding matrix indicator (precoding matrix indicator, PMI) feedback, rank indication (rank indication, RI) feedback, channel quality indicator (channel quality indicator, CQI) feedback, and the like.

In addition, the first feedback information may further include energy saving information, such as wake-up indication information or sleep indication information, where the wake-up indication information may be used to wake up UE to receive at least PSCCH information, and the sleep indication information may indicate that the UE may enter a sleep state and not receive the PSCCH information. The first feedback information may further include resource assistance information. The resource assistance information is, for example, information that indicates a resource recommended for use, information that indicates a resource not recommended for use, information that indicates a resource collision, information that indicates a resource reservation conflict, or information that indicates that a half-duplex collision has occurred in the past or is to occur in the future.

It should be understood that, in this application, the valid feedback information means that the feedback information at least indicates a status of receiving the sidelink information by a receive end of the sidelink information, and the feedback information needs to be received by a transmit end of the sidelink information.

The second feedback information may be replication information of the first feedback information, or may carry fixed information (or the second feedback information may be a predefined bit). For example, the second feedback information is "0", "1", or other information that has no practical meaning, because the second frequency domain resource is occupied to meet an OCB requirement of an unlicensed frequency band, and only transmitting at a specific power is required. The second feedback information may be referred to as invalid feedback information. The invalid feedback information means that the feedback information is used only to occupy a channel. Therefore, the transmit end of the sidelink information may not receive and/or receive and discard the feedback information.

Optionally, in this application, even if the first terminal apparatus does not need to transmit the first feedback information on the second frequency domain resource, the first terminal apparatus still needs to transmit the second feedback information on the second frequency domain resource. A purpose is to occupy the first channel in the COT, to prevent the first channel from being preempted by another user. Specifically, the first terminal apparatus accesses the first channel, and transmits the second feedback information on the second frequency domain resource in each time unit in the time unit set, where the time unit in each time unit includes a feedback resource. A case in which the first feedback information is not required includes at least one of the following: The first terminal apparatus correctly receives the first data in a HARQ feedback mechanism with only NACK feedback, the first terminal apparatus discards the first feedback information due to a priority (that is, the first terminal apparatus needs to transmit information with a higher priority and discards the first feedback information), the first terminal apparatus does not correctly decode the sidelink control information (that is, the first terminal apparatus does not know that the first feedback information needs to be sent), or the like. It should be understood that the second frequency domain resource is shared to all terminal devices that access the first channel and is used to transmit the second feedback information, and is not limited to the first terminal device.

Optionally, the first channel herein may belong to an SL BWP, an SL resource pool, or a sub channel in an SL resource pool. The SL BWP may be a resource determined based on the SL BWP configuration information. The SL resource pool may be a resource determined based on the SL resource pool configuration information.

The following describes a manner of determining the first frequency domain resource and the second frequency domain resource with reference to the accompanying drawings. Because the first frequency domain resource may be determined based on the second frequency domain resource, a manner of determining the second frequency domain resource is first described herein, but it does not indicate that a process of determining the second frequency domain resource is performed before a process of determining the first frequency domain resource.

(1) About the second frequency domain resource

In this application, the second frequency domain resource may include two discontinuous resource blocks, a frequency domain gap between the two discontinuous resource blocks is *Offset* resource blocks, and the two resource blocks may be respectively the first resource block and the last resource block in the second frequency domain resource. The frequency domain gap herein refers to a quantity of resource blocks between the two discontinuous resource blocks.

Optionally, bandwidth corresponding to *(Offset* + 2) resource blocks is greater than or equal to a product of bandwidth of the first channel and a first coefficient. In other words, bandwidth corresponding to the second frequency domain resource is greater than or equal to a product of the bandwidth of the first channel and the first coefficient, where the first coefficient is greater than 0 and less than 1. For example, 0.8 <the first coefficient<1. Optionally, the first coefficient is a minimum occupying proportion that is of the first bandwidth and that meets the OCB requirement. An objective of this design is to enable the first terminal apparatus to transmit the second feedback information by using the second frequency domain resource, so that the OCB requirement is met. Optionally, the second frequency domain resource may further include at least one resource block between the two discontinuous resource blocks.

The following describes the manner of determining the second frequency domain resource.

In this application, the second frequency domain resource may be indicated by the network device, or may be preconfigured, or may be predefined. Therefore, the second frequency domain resource may be configured independently of time-frequency resource of a PSFCH in NR releases 16 and 17. For example, a same second frequency domain resource may be configured for a plurality of terminal apparatuses through indication by the network device, or in a preconfiguration or predefinition manner. Therefore, a plurality of second terminal apparatuses may transmit the second feedback information on the same second frequency domain resource, so that the plurality of terminal apparatuses occupy a same channel.

In a possible determining manner, an interlaced resource included in the SL resource pool may be determined, and the resource pool includes the first channel. In other words, a frequency domain resource of the resource pool is greater than or equal to a frequency domain resource of the first channel. For example, one SL resource pool may include M sub channels, and one sub channel corresponds to one interlaced resource. In other words, a quantity of sub channels is equal to a quantity of interlaced resources, and the sub channels are in a one-to-one correspondence with the interlaced resources. For example, a first sub channel corresponds to a first interlaced resource, and the rest may be deduced by analogy In this case, the first terminal apparatus may determine, through indication by the network device, or in a preconfiguration or predefinition manner, the interlaced resource included in the SL resource pool.

Alternatively, one SL resource pool includes M interlaced resources. Indexes (or sequence numbers or numbers) of the interlaced resources in the resource pool are 0 to M-1. Optionally, one SL resource pool includes N sub channels, and it may be determined that at least one of the N sub channels includes the first channel, that is, a frequency domain resource of the sub channel is greater than or equal to a frequency domain resource of the first channel, where each sub channel includes M interlaced resources, and indexes of the interlaced resources in each sub channel are 0 to M-1.

In this manner, the second frequency domain resource is an $m^{th}$ interlaced resource of the first channel, the interlaced resource includes at least two resource blocks that are interlaced in frequency domain, where $m$ is an integer greater than or equal to 1 and less than or equal to a total quantity of interlaced resources in the first channel, and a value of $m$ is predefined, or is a preconfigured value, or is indicated or configured for the first terminal apparatus by the network device by using the DCI, the RRC signaling, the SIB information, or the MIB information. Therefore, the first terminal apparatus may determine the $m^{th}$ interlaced resource of the first channel as the second frequency domain resource through indication by the network device, or in a preconfiguration or predefinition manner.

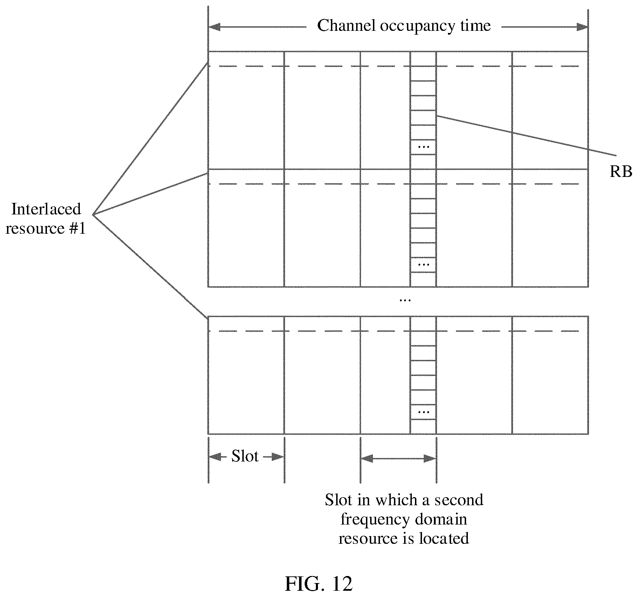

For example, as shown in FIG. 12, an interlaced resource #1 is used as the second frequency domain resource. Optionally, all PRBs included in the interlaced resource #1 in FIG. 12 are the second frequency domain resource, or a resource block with a smallest index and a resource block with a largest index included in the interlaced resource #1 are the second frequency domain resource.

In another possible implementation, the first resource block of the second frequency domain resource may be an N1$^{th}$ (or described as $N_{RB}^{first}$) resource block in the first channel, and the N1$^{th}$ resource block may be an N1$^{th}$ resource block marked starting from a largest or smallest RB index; and the last resource block of the second frequency domain resource may be an N2$^{th}$ (or described as $N_{RB}^{last}$) resource block in the first channel, and the N2$^{th}$ resource block may be an N2$^{th}$ resource block marked starting from the largest or smallest RB index. N1 and N2 are positive integers, and values of N1 and N2 may be predefined, indicated by the network device, or preconfigured. Optionally, a difference between N1 and N2 is *Offset.* Therefore, the bandwidth corresponding to the second frequency domain resource may be greater than or equal to the product of the bandwidth of the first channel and the first coefficient by using the values of N 1 and N2.

It should be understood that the first resource block of the second frequency domain resource herein may be a resource block with a smallest number when the resource blocks are arranged in descending order of numbers. In other words, the first resource block is a resource block with a lowest frequency in the second frequency domain resource. The last resource block of the second frequency domain resource may be a resource block with a largest number when the resource blocks are arranged in descending order of numbers. In other words, the last resource block is a resource block with a highest frequency in the second frequency domain resource. It may be understood that a value of a number is relative to that of the first channel. Therefore, the first terminal apparatus may determine, through indication by the network device, or in a preconfiguration or predefinition manner, that the N1$^{th}$ resource block is the first resource block of the second frequency domain resource and the N2$^{th}$ resource block is the last resource block of the second frequency domain resource.

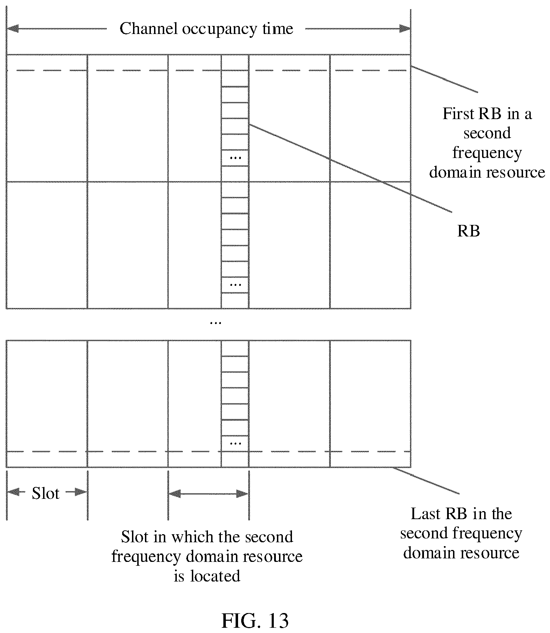

For example, N1=N2=1, that is, the first resource block of the second frequency domain resource is a resource block with the smallest RB index in the first channel, and the last resource block of the first frequency domain resource is a resource block with the largest RB index in the first channel. The values of N1 and N2 may be equal or unequal, provided that the OCB requirement is met. In this case, as shown in FIG. 13, the second frequency domain resource may include the first PRB and the last PRB in the first channel.

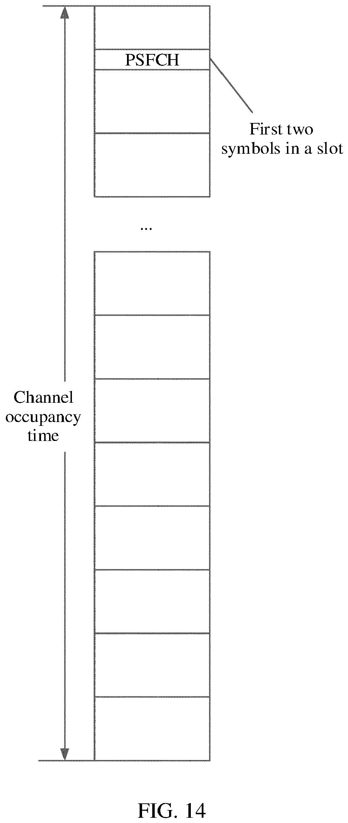

Optionally, the first feedback information and/or the second feedback information occupy/occupies the last two symbols of a slot in which the feedback time unit is located. Alternatively, when the last symbol of the feedback time unit is a gap symbol (gap symbol), the first feedback information and/or the second feedback information occupy/occupies the penultimate symbol and the last third symbol of the slot in which the feedback time unit is located. Alternatively, the first feedback information and/or the second feedback information occupy/occupies the first two symbols of the slot in which the feedback time unit is located. As shown in FIG. 14, for example, the feedback time unit is the last slot of the channel occupancy time, and the first feedback information and/or the second feedback information occupies/occupies the first two symbols of the slot. The first feedback information and/or the second feedback information may alternatively occupy another symbol of the slot in which the feedback time unit is located.

(2) First frequency domain resource

Optionally, the first terminal apparatus may determine the first frequency domain resource based on an index and/or a quantity of interlaced resources corresponding to the time-frequency resource carrying the first data and identifier (identifier, ID) information corresponding to the first data. That a feedback resource exists in every $N_{PSSCH}^{PSFCH}$ time units in the time unit set is defined, and the time unit may be a slot. A method for determining $N_{PSSCH}^{PSFCH}$ may be the manner in S102, that is, determining the time unit set. The time-frequency resource carrying the first data may include, in time domain, a slot i in which the first data is located, where $0 \leq i < 0 \leq i < N_{PSSCH}^{PSFCH}$, and may be determined in frequency domain based on an index j and/or a quantity $N_{interlace}$ of interlaced resources. Therefore, the index j and/or the quantity $N_{interlace}$ may be referred to as the index and/or the quantity of interlaced resources corresponding to the time-frequency resource carrying the first data, where $0 \leq j < N_{interlace}$, and $N_{interlace}$ represents a quantity of interlaced resources in a resource pool or a sub channel.

For example, the ID information corresponding to the first data may include source ID information and/or target ID information of the first data. The source ID information of the first data may include an identifier of the second terminal apparatus, an identifier of a terminal apparatus that initiates a service to which the first data belongs, or an identifier of a terminal apparatus that transmits the first data. The target ID information of the first data may include an identifier of the first terminal apparatus, an identifier of a terminal apparatus that receives the service to which the first data belongs, or an identifier of a terminal apparatus that receives the first data.

Specifically, the ID information may be layer-1 (layer-1) ID information, namely, physical layer ID information, is carried in physical control signaling such as SCI, and includes a destination ID (destination ID) denoted as $Dest_{ID}$ and a source ID (source ID) denoted as $Src_{ID}$. The ID information may alternatively be layer-2 (layer-2) ID information, namely, MAC layer ID information, is carried in the MAC CE, and includes a destination ID and a source ID. The layer-1 ID information is at least a part of the layer-2 ID information, that is, the layer-2 ID information includes a complete destination ID and a complete source ID, and the layer-1 ID information carries a part of the layer-2 ID information. For example, a length of the layer-2 destination ID is 24 bits, the layer-1 destination ID is the first 16 bits of the layer-2 destination ID; and a length of the layer-2 source ID is 24 bits, and the layer-1 source ID is the first 8 bits of information of the layer-2 source ID. The foregoing 8, 16, and 24 bits are merely examples, and may be other positive integers in actual application, provided that a quantity of bits of the layer-2 ID (including the source ID and the destination ID) is greater than or equal to a quantity of bits of the layer-1 ID.

It should be understood that the ID information may be used to identify the terminal device, or the ID information corresponding to the first data herein may be an identifier related to the first terminal apparatus and/or the second terminal apparatus. Alternatively, the ID information may be used to identify data or a data service. In other words, the ID information may be an identifier related to the first data and/or the service to which the first data belongs. In this case, the ID information may be allocated by an application (application, APP) layer. From a perspective of a physical layer, each PSSCH may have corresponding layer-1 ID information carried in corresponding SCI.

In another example, the ID information further includes a UE identifier in multicast, that is, represents a unique identifier $M_{ID}$ of the UE in a multicast service or multicast communication.

For example, the first terminal apparatus may determine, based on at least one piece of information in , the time-frequency resource carrying the first data, an available code domain resource $N_{CS}^{PSFCH}$ for the first feedback information, or a set $M_{PRB,set}^{PSFCH}$ of RB resources available for transmitting the PSFCH, a number of an RB in which the first frequency domain resource is located.

The available code domain resource of the first feedback information may be a quantity of available CS pairs, for example, 1, 2, 4, or 6, and the first terminal apparatus may determine, from the CS pairs, a CS pair corresponding to the first feedback information. The set of RB resources available for transmitting the PSFCH may be a set of possible RBs of the first frequency domain resource and/or the second frequency domain resource. The quantity of available CS pairs and/or the set of RB resources available for transmitting the PSFCH may be predefined, or may be preconfigured, or may be indicated by the network device for the first terminal apparatus by using the DCI, the RRC signaling, or the SIB, or may be indicated by the second terminal apparatus for the first terminal apparatus by using the SCI or the PC5 RRC signaling.

Optionally, in implementation of S103, the first terminal apparatus may further transmit, based on a first code domain resource, the first feedback information on the first frequency domain resource in the feedback time unit, where the first code domain resource is determined based on the index and/or the quantity of interlaced resources corresponding to the time-frequency resource carrying the first data and the identifier information corresponding to the first data. For example, the first terminal apparatus may determine, from the CS pair corresponding to the first feedback information, the first code domain resource determined with the first frequency domain resource, to transmit the first feedback information on the first frequency domain resource in the feedback time unit by using the first code domain resource.

Specifically, the first terminal apparatus may determine the first frequency domain resource and/or the first code domain resource in the following manner.

Step 1

The first terminal apparatus may determine, from PRBs corresponding to $M_{PRB,set}^{PSFCH}$, in a principle of sorting i in an ascending order and then sorting j in an ascending order, a PRB whose number is

$$\left[(i + j \times N_{PSSCH}^{PSFCH}) \times M_{interlace,slot}^{PSFCH}, (i + 1 + j \times N_{PSSCH}^{PSFCH}) \times M_{interlace,slot}^{PSFCH} - 1\right]$$

as a number range of an RB in which a candidate resource of the first frequency domain resource corresponding to a PSSCH received in a slot i and a sub channel j is located, where i is a slot in which the first data is located, and j is the index of the interlaced resource.

In other words, RBs numbered from $(i + j \times N_{PSSCH}^{PSFCH}) \times M_{interlace,slot}^{PSFCH}$ to $(i + 1 + j \times N_{PSSCH}^{PSFCH}) \times M_{interlace,slot}^{PSFCH} - 1$ are determined in $M_{PRB,set}^{PSFCH}$, to feed back the PSSCH received in the slot i and the interlace j, where $M_{interlace,slot}^{PSFCH} = M_{PRB,set}^{PSFCH}/(N_{interlace} \times N_{PSSCH}^{PSFCH})$.

Step 2

The first terminal apparatus may determine a total quantity $R_{PRB,CS}^{PSFCH}$ of PSFCH frequency domain and code domain resources used for feeding back the PSSCH. Optionally, $R_{PRB,CS}^{PSFCH}$ satisfies:

$$R_{PRB,CS}^{PSFCH} = N_{type}^{PSFCH} \times M_{interlace,slot}^{PSFCH} \times N_{CS}^{PSFCH}$$

There are two values of a PSFCH resource type $N_{type}^{PSFCH}$, and the values may be preconfigured, configured, or predefined. When $N_{type}^{PSFCH} = 1$, $M_{interlace,slot}^{PSFCH}$ is associated with an interlaced resource with a smallest index assigned to the corresponding PSSCH. When $N_{type}^{PSFCH} = N_{interlace}^{PSSCH}$, $M_{interlace,slot}^{PSFCH}$ is associated with all interlaced resources allocated for the corresponding PSSCH, where $N_{interlace}^{PSSCH}$ is the total quantity of interlaced resources allocated for the corresponding PSSCH.

Step 3

$R_{PRB,CS}^{PSFCH}$ is sorted and numbered according to a first resource sorting rule, to obtain total PSFCH frequency domain and code domain resources and a PSFCH resource number, where the first resource sorting rule includes frequency domain first and then code domain, or code domain first and then frequency domain, which is not limited herein. The first frequency domain resource and the first code domain resource are determined based on the ID information denoted as ID) and the PSFCH resource number determined based on $R_{PRB,CS}^{PSFCH}$ , specifically the PSFCH resource number obtained by using $(ID) mod R_{PRB,CS}^{PSFCH}$ , where *ID* represents the identifier information corresponding to the first data, and the first frequency domain resource and the first code domain resource are determined based on the PSFCH resource number according to the first resource sorting rule.

Optionally, $D = Src_{ID}$, or $ID = Dest_{ID}$, or $ID = M_{ID}$, or $ID = Src_{ID} + M_{ID}$, or $ID = Dest_{ID} + M_{ID}$, or $ID = Src_{ID} + Dest_{ID} + M_{ID}$.

It should be understood that the set of RB resources in the first channel available for transmitting the PSFCH may not include the second frequency domain resource, and the PSFCH resource may be used to transmit the second frequency domain resource. Transmission of the first resource does not belong to the PSFCH. In another possible implementation, if the set of RB resources in the first channel available for transmitting the PSFCH includes the first frequency domain resource and the second frequency domain resource, the PSFCH resource may be used to transmit the first feedback information, and may further be used to transmit the second feedback information.

For example, when the first communication apparatus uses the structure shown in FIG. 6, S101 may be performed by using the transceiver module 620. When the first communication apparatus uses the structure shown in FIG. 7, S101 may be performed by using the transceiver unit 710. When the first communication apparatus uses the structure shown in FIG. 6, an action of determining the first code domain resource, the first frequency domain resource, and the second frequency domain resource may be performed by the processing module 610. When the first communication apparatus uses the structure shown in FIG. 7, the action of determining the first code domain resource, the first frequency domain resource, and the second frequency domain resource may be performed by the processing unit 720.

In S103, correspondingly, the second terminal apparatus may receive the first feedback information on the first frequency domain resource in the feedback time unit. The first frequency domain resource is determined based on the time-frequency resource carrying the first data. The first feedback information is valid feedback information for the first data. For descriptions of the first feedback information, refer to the foregoing descriptions.

An implementation of receiving the first feedback information by the second terminal apparatus on the first frequency domain resource in the feedback time unit may be that the second terminal apparatus may detect the first feedback information on the first frequency domain resource.

Optionally, before the second terminal apparatus receives the first feedback information on the first frequency domain resource in the feedback time unit, the second terminal apparatus determines the first frequency domain resource. Further, optionally, the second terminal apparatus may further determine the second frequency domain resource. The second frequency domain resource is used to receive the second feedback information, and the second feedback information may be replication information of the first feedback information or a predefined bit stream. For a manner of determining the first frequency domain resource by the second terminal apparatus, refer to the description of determining the first frequency domain resource by the first terminal apparatus in S103. For a manner of determining the second frequency domain resource by the second terminal apparatus, refer to the description of determining the second frequency domain resource by the first terminal apparatus in S103.

The second frequency domain resource may include two discontinuous resource blocks, a frequency domain gap between the two discontinuous resource blocks is *Offset* resource blocks, and the two resource blocks may be respectively the first resource block and the last resource block in the second frequency domain resource. The frequency domain gap herein refers to a quantity of resource blocks between the two discontinuous resource blocks. Optionally, bandwidth corresponding to *(Offset* + 2) resource blocks is greater than or equal to a product of bandwidth of the first channel and a first coefficient, and the first coefficient is greater than 0 and less than 1.

Optionally, the second frequency domain resource may be indicated by the network device, or may be preconfigured, or may be predefined. For example, the second terminal apparatus determines an $m^{th}$ interlaced resource of the first channel as the second frequency domain resource through indication by the network device, or in a preconfiguration or predefinition manner. For a meaning of *m,* refer to the description in S103. For another example, the second terminal apparatus determines, through indication by the network device, or in a preconfiguration or predefinition manner, that an N1$^{th}$ resource block is the first resource block of the second frequency domain resource and an N2$^{th}$ resource block is the last resource block of the second frequency domain resource. For meanings of N1 and N2, refer to descriptions in S103.

Optionally, the second terminal apparatus may determine the first frequency domain resource based on the index and/or the quantity of interlaced resources corresponding to the time-frequency resource carrying the first data and the ID information corresponding to the first data. For the index and/or the quantity of interlaced resources corresponding to the time-frequency resource carrying the first data and the ID information corresponding to the first data, refer to the description in S103.

In some embodiments, the second terminal apparatus may further receive the first feedback information on the first frequency domain resource in the feedback time unit based on the first code domain resource, where the first code domain resource is determined based on the index and/or the quantity of interlaced resources corresponding to the time-frequency resource carrying the first data and the identifier information corresponding to the first data.

For example, the second terminal apparatus may determine the first frequency domain resource and/or the first code domain resource with reference to step 1 to step 3.

Optionally, the second terminal apparatus may receive the second feedback information on the second frequency domain resource in the feedback time unit. For example, the second terminal apparatus may blindly detect the second feedback information on the second frequency domain resource. After receiving the second feedback information, the second terminal apparatus may discard the second feedback information. The second terminal apparatus also does not detect the second feedback information on the second frequency domain resource.

It should be understood that, an execution time sequence in which the second terminal apparatus receives the first feedback information on the first frequency domain resource in the feedback time unit and an execution time sequence in which S103 is performed are not limited in this application. In addition, a time sequence relationship between determining the first frequency domain resource by the first terminal apparatus and determining the first frequency domain resource by the second terminal apparatus is not limited, and a time sequence relationship between determining the second frequency domain resource by the first terminal apparatus and determining the second frequency domain resource by the second terminal apparatus is not limited.

For example, when the second communication apparatus uses the structure shown in FIG. 6, an action of receiving the first feedback information by the second terminal apparatus on the first frequency domain resource in the feedback time unit may be performed by using the transceiver module 620. When the second communication apparatus uses the structure shown in FIG. 7, the action of receiving the first feedback information by the second terminal apparatus on the first frequency domain resource in the feedback time unit may be performed by using the transceiver unit 710. When the second communication apparatus uses the structure shown in FIG. 6, an action of determining the first code domain resource, the first frequency domain resource, and/or the second frequency domain resource may be performed by the processing module 610. When the second communication apparatus uses the structure shown in FIG. 7, the action of determining the first code domain resource, the first frequency domain resource, and/or the second frequency domain resource may be performed by the processing unit 720.

According to the method shown in FIG. 8, the first terminal apparatus may transmit the feedback information on the first frequency domain resource and the second frequency domain resource in the feedback time unit. The feedback time unit is a time unit that corresponds to the first data and that is in the channel occupancy time. Therefore, frequency domain bandwidth occupied by the feedback information may be increased in a transmitting process of the feedback information, so that a sidelink information feedback process of the first terminal apparatus meets a requirement of an unlicensed frequency band for channel access, and a feedback mechanism for transmitting HARQ information by using a PSFCH can be used in the unlicensed frequency band, to improve communication reliability of an SL system in the unlicensed frequency band.

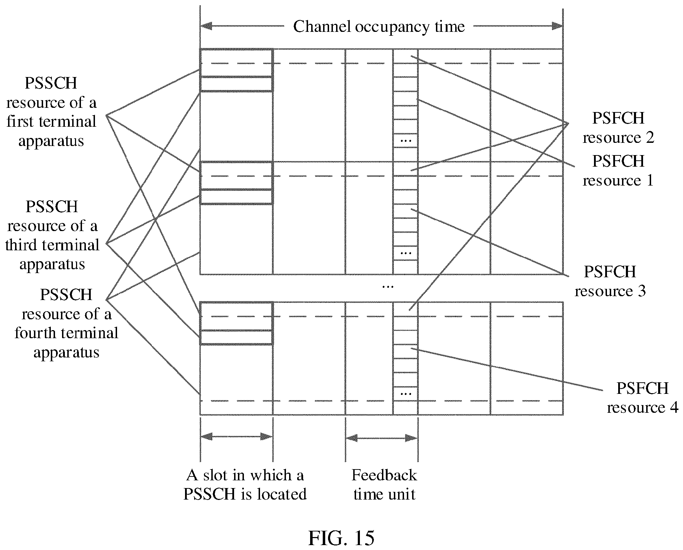

Based on the method shown in FIG. 8, as shown in FIG. 15, the first terminal apparatus that accesses the first channel may transmit the first feedback information to the second terminal apparatus on the first frequency domain resource (a PSFCCH frequency domain resource 1 in FIG. 15) in the feedback time unit, and transmit the second feedback information to the second terminal apparatus on the second frequency domain resource (a PSFCCH frequency domain resource 2 in FIG. 15) in the feedback time unit.

In addition, as shown in FIG. 15, another terminal apparatus other than the first terminal apparatus may transmit feedback information by using the feedback time unit, and the another terminal apparatus includes but is not limited to a third terminal apparatus and a fourth terminal apparatus shown in the figure. Optionally, all the terminal apparatuses including the first terminal apparatus may transmit feedback information on the second frequency domain resource, and these terminal apparatuses including the first terminal apparatus each transmits valid feedback information for respective sidelink information on a first frequency domain resource of each terminal apparatus.

For example, as shown in FIG. 15, the third terminal apparatus may transmit third feedback information by using a PSFCH resource 3, and transmit fourth feedback information by using a PSFCH resource 2. The third terminal apparatus may receive sidelink information (for example, including second data) from any terminal apparatus (for example, a fifth terminal apparatus) other than the third terminal apparatus, and transmit, by using the third feedback information, an ACK or a NACK corresponding to the sidelink information. The fourth feedback information may be invalid feedback information. It should be understood that, for a manner in which the third terminal apparatus determines the PSFCH resource 3, refer to a manner in which the first terminal apparatus determines the first frequency domain resource. For a manner in which the third terminal apparatus determines the PSFCH resource 2, refer to a manner in which the first terminal apparatus determines the second feedback resource. Similarly, the fourth terminal apparatus may transmit valid feedback information on the PSFCH resource 4, and transmit invalid feedback information on the PSFCH resource 2. For the valid feedback information described herein as an example, refer to the description of the first feedback information in this application, and for the invalid feedback information, refer to the description of the second feedback information in this application.

Optionally, in FIG. 15, sidelink information of each of the first terminal apparatus, the third terminal apparatus, and the fourth terminal apparatus may be sent by using interlaced resources. Therefore, the first channel may be occupied by at least one terminal apparatus that separately transmits sidelink information to the first terminal apparatus to the fourth terminal apparatus.

Based on a same inventive concept, an embodiment of this application further provides a communication apparatus, configured to implement the foregoing functions implemented by the first terminal apparatus and/or the second terminal apparatus. The apparatus may include the structure shown in FIG. 6 and/or FIG. 7.

When the first communication apparatus provided in this embodiment of this application is implemented by using the structure shown in FIG. 6, the transceiver module 620 may be configured to receive first data from the second terminal apparatus. The processing module 610 may be configured to determine a feedback time unit in a channel occupancy time. For the feedback time unit, refer to the description in the foregoing method embodiment. The transceiver module 620 may be further configured to access a first channel, transmit first feedback information on a first frequency domain resource in the feedback time unit, and transmit second feedback information on a second frequency domain resource in the feedback time unit. For the first feedback information, the first frequency domain resource, and the second frequency domain resource, refer to the descriptions in the foregoing method embodiment.

In a possible design, the processing module 610 may be further configured to determine the first frequency domain resource.

In a possible design, the transceiver module 620 may be further configured to receive indication information of the channel occupancy time from the second terminal apparatus.

In a possible design, the second frequency domain resource may be indicated by a network device, preconfigured, or predefined. If the second frequency domain resource is indicated by the network device, the transceiver module 620 may be further configured to receive indication information of the second frequency domain resource.

In a possible design, the second frequency domain resource is an $m^{th}$ interlaced resource in the first channel, and the interlaced resource includes at least two resource blocks interlaced in frequency domain, where $m$ is an integer, and $m$ is greater than or equal to 1, and is less than or equal to a total quantity of interlaced resources included in the first channel. A value of $m$ is predefined, indicated by the network device, or preconfigured. If the value of $m$ is indicated by the network device, the transceiver module 620 may be further configured to receive indication information of the value of $m$.

In a possible design, the first resource block of the second frequency domain resource is an $N1^{th}$ resource block in the first channel, and the last resource block of the second frequency domain resource is an $N2^{th}$ resource block in the first channel, where N1 and N2 are positive integers, and values of N1 and/or N2 are predefined, indicated by the network device, or preconfigured. If the value of N1 is indicated by the network device, the transceiver module 620 may be further configured to receive indication information of the value of N1 and/or the value of N2.

In a possible design, the processing module 610 may be further configured to determine the first frequency domain resource based on an index and/or a quantity of interlaced resources corresponding to a time-frequency resource carrying the first data and identifier information corresponding to the first data.

In a possible design, the transceiver module 620 may be specifically configured to transmit, by the first terminal apparatus, the first feedback information on the first frequency domain resource in the feedback time unit based on a first code domain resource, where the first code domain resource is determined based on the index and/or the quantity of interlaced resources corresponding to the time-frequency resource carrying the first data and the identifier information corresponding to the first data. The processing module 610 may be configured to determine the first code domain resource.

In a possible design, the processing module 610 may be configured to determine the feedback time unit from a time unit set based on the time-frequency resource carrying the first data, where the time unit set includes at least one time unit, and a time unit in the at least one time unit includes a feedback resource.

In a possible design, a time domain gap between a start location of the first time unit in the time unit set and a start location of the channel occupancy time may be $X_1$ time units, and a time domain gap between every two adjacent time units in the time unit set may be $M_1$ time units, where $X_1$ and $M_1$ may be predefined, indicated by the network device, indicated by the second terminal apparatus, or preconfigured, $X_1$ is a positive integer greater than or equal to 0, and $M_1$ is a positive integer greater than or equal to 0. If $X_1$ and $M_1$ are indicated by the network device, the transceiver module 620 may be further configured to receive indication information of a value of $X_1$ and/or $M_1$.

In a possible design, the processing module 610 may be configured to determine, based on received first indication information, the time unit set from a time unit included in the channel occupancy time, where the first indication information is from the network device or the second terminal apparatus. The transceiver module 620 may be further configured to receive the first indication information.

In a possible design, the processing module 610 may be configured to determine that the feedback time unit may be the last time unit in the channel occupancy time when the channel occupancy time is less than a time threshold.

When the first communication apparatus provided in this embodiment of this application is implemented by using the structure shown in FIG. 7, actions performed by the processing module 610 in the foregoing example may be performed by the processing unit 720 shown in FIG. 7. Details are not described again. Similarly, the foregoing actions of the first communication apparatus performed by the transceiver module 620 may be performed by the transceiver unit 710 shown in FIG. 7.

When the second communication apparatus provided in this embodiment of this application is implemented by using the structure shown in FIG. 6, the transceiver module 620 may be configured to: access a first channel, and transmit first data to the first terminal apparatus. The processing module 610 may be configured to determine a feedback time unit in a channel occupancy time. The transceiver module 620 may be further configured to receive first feedback information on a first frequency domain resource in the feedback time unit

In a possible design, the processing module 610 may be further configured to determine the first frequency domain resource.

In a possible design, the transceiver module 620 may be further configured to: receive and discard the second feedback information. The processing module 610 may be further configured to determine a second frequency domain resource used to carry the second feedback information.

In a possible design, the second frequency domain resource may be indicated by a network device, preconfigured, or predefined. If the second frequency domain resource is indicated by the network device, the transceiver module 620 may be further configured to receive indication information of the second frequency domain resource.

In a possible design, the second frequency domain resource is an $m$th interlaced resource in the first channel, and the interlaced resource includes at least two resource blocks interlaced in frequency domain, where $m$ is an integer, and $m$ is greater than or equal to 1, and is less than or equal to a total quantity of interlaced resources included in the first channel. A value of $m$ is predefined, indicated by the network device, or preconfigured. If the value is indicated by the network device, the transceiver module 620 may be further configured to receive indication information of the value of $m$.

In a possible design, the first resource block of the second frequency domain resource is an N1th resource block in the first channel, and the last resource block of the second frequency domain resource is an N2th resource block in the first channel, where N1 and N2 are positive integers, and values of N1 and/or N2 are predefined, indicated by the network device, or preconfigured. If the value of N1 is indicated by the network device, the transceiver module 620 may be further configured to receive indication information of the value of N1 and/or the value of N2.

In a possible design, the transceiver module 620 may be further configured to transmit indication information of the channel occupancy time to the first terminal apparatus.

In a possible design, the processing module 610 may be further configured to determine the first frequency domain resource based on an index and/or a quantity of interlaced resources corresponding to a time-frequency resource carrying the first data and identifier information corresponding to the first data.

In a possible design, the transceiver module 620 may be specifically configured to receive, by the first terminal apparatus, the first feedback information on the first frequency domain resource in the feedback time unit based on a first code domain resource, where the first code domain resource is determined based on the index and/or the quantity of interlaced resources corresponding to the time-frequency resource carrying the first data and the identifier information corresponding to the first data. The processing module 610 may be configured to determine the first code domain resource.

In a possible design, the processing module 610 may be configured to determine the feedback time unit from a time unit set based on the time-frequency resource carrying the first data, where the time unit set includes at least one time unit, and a time unit in the at least one time unit includes a feedback resource.

In a possible design, a time domain gap between a start location of the first time unit in the time unit set and a start location of the channel occupancy time may be $X_1$ time units, and a time domain gap between every two adjacent time units in the time unit set may be $M_1$ time units, where $X_1$ and $M_1$ may be predefined, indicated by the network device, indicated by the second terminal apparatus, or preconfigured, $X_1$ is a positive integer greater than or equal to 0, and $M_1$ is a positive integer greater than or equal to 0. If $X_1$ and $M_1$ are indicated by the network device, the transceiver module 620 may be further configured to receive indication information of a value of $X_1$ and/or $M_1$.

In a possible design, the transceiver module 620 may be further configured to transmit first indication information to the first terminal apparatus, where the first indication information is used by the first terminal apparatus to determine the time unit set from a time unit included in the channel occupancy time.

In a possible design, the processing module 610 may be configured to determine, based on received second indication information, the time unit set from the time unit included in the channel occupancy time, where the second indication information is from the network device. The transceiver module 620 may be further configured to receive the second indication information.

In a possible design, the processing module 610 may be configured to determine that the feedback time unit may be the last time unit in the channel occupancy time when the channel occupancy time is less than a time threshold.

When the second communication apparatus provided in this embodiment of this application is implemented by using the structure shown in FIG. 7, actions performed by the processing module 610 in the foregoing example may be performed by the processing unit 720 shown in FIG. 7. Details are not described again. Similarly, the foregoing actions of the second communication apparatus performed by the transceiver module 620 may be performed by the transceiver unit 710 shown in FIG. 7.

It should be understood that for details of terms and possible implementations in the apparatus embodiments, refer to the descriptions or explanations in the foregoing method embodiments. Details are not described herein again.

An embodiment of this application provides a communication system. The communication system may include the first terminal apparatus and/or the second terminal apparatus in the foregoing embodiments. Optionally, the communication system may include any structure shown in FIG. 1 to FIG. 2. The communication apparatus may be configured to implement the steps implemented by the first terminal apparatus and/or the second terminal apparatus in the communication method shown in FIG. 8.

An embodiment of this application further provides a computer-readable storage medium. The computer-readable storage medium is configured to store a computer program. When the computer program is executed by a computer, the computer may implement a procedure related to the first terminal apparatus and/or the second terminal apparatus in the embodiment shown in FIG. 8 provided in the foregoing method embodiments.

An embodiment of this application further provides a computer program product. The computer program product is configured to store a computer program. When the computer program is executed by a computer, the computer may implement a procedure related to the first terminal apparatus and/or the second terminal apparatus in the embodiment shown in FIG. 8 provided in the foregoing method embodiments.

An embodiment of this application further provides a chip or a chip system (or a circuit). The chip may include a processor. The processor may be configured to invoke a program or instructions in a memory, to perform a procedure related to the first terminal apparatus and/or the second terminal apparatus in the embodiment shown in FIG. 8 provided in the foregoing method embodiments. The chip system may include the chip, and may further include another component such as a memory or a transceiver.

It should be noted that the communication apparatus in the foregoing embodiments may be a terminal device, or may be a chip used in a terminal device, or another combined device, member, or the like that can implement a function of the foregoing terminal device. When the communication apparatus is the terminal device, the transceiver unit may be a transmitter and a receiver, or an integrated transceiver, and may include an antenna, a radio frequency circuit, and the like; and the processing unit may be a processor, for example, a baseband chip. When the communication apparatus is the member that has functions of the terminal device, the transceiver unit may be a radio frequency unit, and the processing unit may be a processor. When the communication apparatus is a chip system, the transceiver unit may be an input/output interface of the chip system, and the processing unit may be a processor of the chip system, for example, a central processing unit (central processing unit, CPU).

It may be understood that the processor in embodiments of this application may be the CPU, or may be another general purpose processor, a digital signal processor (digital signal processor, DSP), an application specific integrated circuit (application specific integrated circuit, ASIC), a field programmable gate array (field programmable gate array, FPGA), or another programmable logic device, a transistor logic device, a hardware component, or any combination thereof. The general purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the first terminal apparatus and/or the second terminal apparatus. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. In the text descriptions of this application, the character "/" generally indicates an "or" relationship between the associated objects. In a formula in this application, the character "/" indicates a "division" relationship between the associated objects.

In embodiments of this application, the term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following" or similar expressions refer to any combination of these items, including any combination of single items or a plurality of items. For example, at least one of a, b, or c may indicate a, b, c, a and b, a and c, b and c, or a, b, and c, where a, b, and c may be singular or plural.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

**Claims**

1.   A communication method, comprising:

   receiving, by a first terminal apparatus, first data from a second terminal apparatus;
   determining, by the first terminal apparatus, a feedback time unit in a channel occupancy time, wherein the feedback time unit corresponds to the first data; and
   accessing, by the first terminal apparatus, a first channel, transmitting first feedback information on a first frequency domain resource in the feedback time unit, and transmitting second feedback information on a second frequency domain resource in the feedback time unit, wherein
   the first feedback information is an acknowledgment or a negative acknowledgment for the first data, the first frequency domain resource is determined based on a time-frequency resource carrying the first data, the first frequency domain resource and the second frequency domain resource belong to the first channel, and the first frequency domain resource and the second frequency domain resource do not overlap.

2.   The method according to claim 1, wherein
   the channel occupancy time is a maximum channel occupancy time determined by the second terminal apparatus, or the channel occupancy time is less than a maximum channel occupancy time determined by the second terminal apparatus.

3.   The method according to claim 1 or 2, further comprising:
   receiving, by the first terminal apparatus, indication information of the channel occupancy time from the second terminal apparatus.

4.   The method according to any one of claims 1 to 3, wherein
   the second frequency domain resource is indicated by a network device, or is preconfigured, or is predefined.

5.   The method according to any one of claims 1 to 4, wherein the second frequency domain resource comprises two discontinuous resource blocks, a frequency domain gap between the two discontinuous resource blocks is *Offset* resource blocks, and *Offset* satisfies:
   bandwidth corresponding to (*Offset* + 2) resource blocks is greater than or equal to a product of bandwidth of the first channel and a first coefficient, and the first coefficient is greater than 0 and less than or equal to 1.

6.   The method according to any one of claims 1 to 5, wherein the second feedback information is replication information of the first feedback information, or the second feedback information is a predefined bit stream.

7.   The method according to any one of claims 1 to 6, wherein
   the second frequency domain resource is an $m^{th}$ interlaced resource in the first channel, and the interlaced resource comprises at least two resource blocks interlaced in frequency domain, wherein $m$ is an integer, $m$ is greater than or equal to 1, and is less than or equal to a total quantity of interlaced resources comprised in the first channel, and a value of $m$ is predefined, indicated by the network device, or preconfigured.

8. The method according to any one of claims 1 to 7, wherein
the first resource block of the second frequency domain resource is an $N1^{th}$ resource block in the first channel, and the last resource block of the second frequency domain resource is an $N2^{th}$ resource block in the first channel, wherein N1 and N2 are positive integers, and values of N1 and N2 are predefined, indicated by the network device, or preconfigured.

9. The method according to any one of claims 1 to 8, wherein the first frequency domain resource is determined based on an index and/or a quantity of interlaced resources corresponding to the time-frequency resource carrying the first data and identifier information corresponding to the first data.

10. The method according to any one of claims 1 to 9, wherein the transmitting, by the first terminal apparatus, first feedback information on a first frequency domain resource in the feedback time unit comprises:
transmitting, by the first terminal apparatus, the first feedback information on the first frequency domain resource in the feedback time unit based on a first code domain resource, wherein the first code domain resource is determined based on the index and/or the quantity of interlaced resources corresponding to the time-frequency resource carrying the first data and the identifier information corresponding to the first data.

11. The method according to any one of claims 1 to 10, wherein the determining, by the first terminal apparatus, a feedback time unit corresponding to the first data in a channel occupancy time comprises:
determining, by the first terminal apparatus, the feedback time unit from a time unit set based on the time-frequency resource carrying the first data, wherein the time unit set comprises at least one time unit, and a time unit in the at least one time unit comprises a feedback resource.

12. The method according to claim 11, wherein a time domain gap between a start location of the first time unit in the time unit set and a start location of the channel occupancy time is $X_1$ time units, a time domain gap between every two adjacent time units in the time unit set is $M_1$ time units, $X_1$ and $M_1$ are predefined, indicated by the network device, indicated by the second terminal apparatus, or preconfigured, $X_1$ is a positive integer greater than or equal to 0, and $M_1$ is a positive integer greater than or equal to 0.

13. The method according to claim 11, further comprising:
determining, by the first terminal apparatus based on received first indication information, the time unit set from a time unit comprised in the channel occupancy time, wherein the first indication information is from the network device or the second terminal apparatus.

14. The method according to any one of claims 1 to 10, wherein the feedback time unit is the last time unit in the channel occupancy time.

15. The method according to any one of claims 1 to 10, wherein the determining, by the first terminal apparatus, a feedback time unit corresponding to the first data in a channel occupancy time comprises:
when the channel occupancy time is less than a time threshold, the feedback time unit is the last time unit in the channel occupancy time.

16. A communication method, comprising:

accessing, by a second terminal apparatus, a first channel, and transmitting first data to a first terminal apparatus;
determining, by the second terminal apparatus, a feedback time unit in a channel occupancy time, wherein the feedback time unit corresponds to the first data; and
receiving, by the second terminal apparatus, first feedback information on a first frequency domain resource in the feedback time unit, wherein
the first feedback information is an acknowledgment or a negative acknowledgment for the first data, and the first frequency domain resource is determined based on a time-frequency resource carrying the first data.

17. The method according to claim 16, further comprising:
receiving and discarding, by the second terminal apparatus, second feedback information, wherein the second feedback information is carried in a second frequency domain resource in the feedback time unit, the first frequency domain resource and the second frequency domain resource belong to the first channel, and the first frequency domain resource and the second frequency domain resource do not overlap.

18. The method according to claim 17, wherein
the second frequency domain resource is indicated by a network device, or is preconfigured, or is predefined.

19. The method according to claim 17 or 18, wherein the second frequency domain resource comprises two discontinuous resource blocks, a frequency domain gap between the two discontinuous resource blocks is *Offset* resource blocks, and *Offset* satisfies:
bandwidth corresponding to *(Offset* + 2) resource blocks is greater than or equal to a product of bandwidth of the first channel and a first coefficient, and the first coefficient is greater than 0 and less than or equal to 1.

20. The method according to any one of claims 17 to 19, wherein the second feedback information is replication information of the first feedback information, or the second feedback information is a predefined bit stream.

21. The method according to any one of claims 17 to 20, wherein
the second frequency domain resource is an $m^{th}$ interlaced resource in the first channel, and the interlaced resource comprises at least two resource blocks interlaced in frequency domain, wherein $m$ is an integer, $m$ is greater than or equal to 1, and is less than or equal to a total quantity of interlaced resources comprised in the first channel, and a value of $m$ is predefined, indicated by the network device, or preconfigured.

22. The method according to any one of claims 17 to 21, wherein
the first resource block of the second frequency domain resource is an $N1^{th}$ resource block in the first channel, and the last resource block of the second frequency domain resource is an $N2^{th}$ resource block in the first channel, wherein N1 and N2 are positive integers, and values of N1 and N2 are predefined, indicated by the network device, or preconfigured.

23. The method according to any one of claims 16 to 22, wherein
the channel occupancy time is a maximum channel occupancy time determined by the second terminal apparatus, or the channel occupancy time is less than a maximum channel occupancy time determined by the second terminal apparatus.

24. The method according to any one of claims 16 to 23, further comprising:
transmitting, by the second terminal apparatus, indication information of the channel occupancy time to the first terminal apparatus.

25. The method according to any one of claims 16 to 24, wherein the first frequency domain resource is determined based on an index and/or a quantity of interlaced resources corresponding to the time-frequency resource carrying the first data and identifier information corresponding to the first data.

26. The method according to any one of claims 16 to 25, wherein the receiving, by the second terminal apparatus, first feedback information on a first frequency domain resource in the feedback time unit comprises:
receiving, by the second terminal apparatus, the first feedback information on the first frequency domain resource in the feedback time unit based on a first code domain resource, wherein the first code domain resource is determined based on the index and/or the quantity of interlaced resources corresponding to the time-frequency resource carrying the first data and the identifier information corresponding to the first data.

27. The method according to any one of claims 16 to 26, wherein the determining, by the second terminal apparatus, a feedback time unit corresponding to the first data in a channel occupancy time comprises:
determining, by the second terminal apparatus, the feedback time unit from a time unit set based on the time-frequency resource carrying the first data, wherein the time unit set comprises at least one time unit, and a time unit in the at least one time unit comprises a feedback resource.

28. The method according to claim 27, wherein a time domain gap between a start location of the first time unit in the time unit set and a start location of the channel occupancy time is $X_1$ time units, a time domain gap between every two adjacent time units in the time unit set is $M_1$ time units, $X_1$ and $M_1$ are predefined, indicated by the network device, indicated by the second terminal apparatus, or preconfigured, $X_1$ is a positive integer greater than or equal

to 0, and $M_1$ is a positive integer greater than or equal to 0.

29. The method according to claim 28, further comprising:
transmitting, by the second terminal apparatus, first indication information to the first terminal apparatus, wherein the first indication information is used by the first terminal apparatus to determine the time unit set from a time unit comprised in the channel occupancy time.

30. The method according to claim 28 or 29, further comprising:
determining, by the second terminal apparatus based on received second indication information, the time unit set from the time unit comprised in the channel occupancy time, wherein the second indication information is from the network device.

31. The method according to any one of claims 16 to 30, wherein the feedback time unit is the last time unit in the channel occupancy time.

32. The method according to any one of claims 16 to 31, wherein the determining, by the first terminal apparatus, a feedback time unit corresponding to the first data in a channel occupancy time comprises:
when the channel occupancy time is less than a time threshold, the feedback time unit is the last time unit in the channel occupancy time.

33. A communication apparatus, comprising:

a transceiver module, configured to receive first data from a second terminal apparatus; and
a processing module, configured to determine a feedback time unit in a channel occupancy time, wherein the feedback time unit corresponds to the first data, wherein
the transceiver module is further configured to: access a first channel, transmit first feedback information on a first frequency domain resource in the feedback time unit, and transmit second feedback information on a second frequency domain resource in the feedback time unit, wherein
the first feedback information is an acknowledgment or a negative acknowledgment for the first data, the first frequency domain resource is determined based on a time-frequency resource carrying the first data, the first frequency domain resource and the second frequency domain resource belong to the first channel, and the first frequency domain resource and the second frequency domain resource do not overlap.

34. The apparatus according to claim 33, wherein
the channel occupancy time is a maximum channel occupancy time determined by the second terminal apparatus, or the channel occupancy time is less than a maximum channel occupancy time determined by the second terminal apparatus.

35. The apparatus according to claim 33 or 34, wherein the transceiver module is further configured to:
receive indication information of the channel occupancy time from the second terminal apparatus.

36. The apparatus according to any one of claims 33 to 35, wherein
the second frequency domain resource is indicated by a network device, or is preconfigured, or is predefined.

37. The apparatus according to any one of claims 33 to 36, wherein the second frequency domain resource comprises two discontinuous resource blocks, a frequency domain gap between the two discontinuous resource blocks is *Offset* resource blocks, and *Offset* satisfies:
bandwidth corresponding to (*Offset* + 2) resource blocks is greater than or equal to a product of bandwidth of the first channel and a first coefficient, and the first coefficient is greater than 0 and less than or equal to 1.

38. The apparatus according to any one of claims 33 to 37, wherein the second feedback information is replication information of the first feedback information, or the second feedback information is a predefined bit stream.

39. The apparatus according to any one of claims 33 to 38, wherein
the second frequency domain resource is an $m^{th}$ interlaced resource in the first channel, the interlaced resource comprises at least two resource blocks interlaced in frequency domain, $m$ is an integer, $m$ is greater than or equal to 1, and is less than or equal to a total quantity of interlaced resources comprised in the first channel, and a value of $m$ is predefined, indicated by the network device, or preconfigured.

40. The apparatus according to any one of claims 33 to 39, wherein
the first resource block of the second frequency domain resource is an N1$^{th}$ resource block in the first channel, and the last resource block of the second frequency domain resource is an N2$^{th}$ resource block in the first channel, wherein N1 and N2 are positive integers, and values of N1 and N2 are predefined, indicated by the network device, or preconfigured.

41. The apparatus according to any one of claims 33 to 40, wherein the first frequency domain resource is determined based on an index and/or a quantity of interlaced resources corresponding to the time-frequency resource carrying the first data and identifier information corresponding to the first data.

42. The apparatus according to any one of claims 33 to 41, wherein the transceiver module is specifically configured to:
transmit the first feedback information on the first frequency domain resource in the feedback time unit based on a first code domain resource, wherein the first code domain resource is determined based on the index and/or the quantity of interlaced resources corresponding to the time-frequency resource carrying the first data and the identifier information corresponding to the first data.

43. The apparatus according to any one of claims 33 to 42, wherein the processing module is specifically configured to:
determine the feedback time unit from a time unit set based on the time-frequency resource carrying the first data, wherein the time unit set comprises at least one time unit, and a time unit in the at least one time unit comprises a feedback resource.

44. The apparatus according to claim 43, wherein a time domain gap between a start location of the first time unit in the time unit set and a start location of the channel occupancy time is $X_1$ time units, a time domain gap between every two adjacent time units in the time unit set is $M_1$ time units, $X_1$ and $M_1$ are predefined, indicated by the network device, indicated by the second terminal apparatus, or preconfigured, $X_1$ is a positive integer greater than or equal to 0, and $M_1$ is a positive integer greater than or equal to 0.

45. The apparatus according to claim 44, wherein the processing module is further configured to:
determine, based on received first indication information, the time unit set from a time unit comprised in the channel occupancy time, wherein the first indication information is from the network device or the second terminal apparatus.

46. The apparatus according to any one of claims 33 to 45, wherein the feedback time unit is the last time unit in the channel occupancy time.

47. The apparatus according to any one of claims 33 to 46, wherein when the channel occupancy time is less than a time threshold, the feedback time unit is the last time unit in the channel occupancy time.

48. A communication apparatus, comprising:

a transceiver module, configured to: access a first channel, and transmit first data to a first terminal apparatus; and
a processing module, configured to determine a feedback time unit in a channel occupancy time, wherein the feedback time unit corresponds to the first data, wherein
the transceiver module is further configured to receive first feedback information on a first frequency domain resource in the feedback time unit, wherein
the first feedback information is an acknowledgment or a negative acknowledgment for the first data, and the first frequency domain resource is determined based on a time-frequency resource carrying the first data.

49. The apparatus according to claim 48, wherein the transceiver module is further configured to:
receive and discard second feedback information, wherein the second feedback information is carried in a second frequency domain resource in the feedback time unit, the first frequency domain resource and the second frequency domain resource belong to the first channel, and the first frequency domain resource and the second frequency domain resource do not overlap.

50. The apparatus according to claim 49, wherein
the second frequency domain resource is indicated by a network device, or is preconfigured, or is predefined.

51. The apparatus according to claim 49 or 50, wherein the second frequency domain resource comprises two discontinuous resource blocks, a frequency domain gap between the two discontinuous resource blocks is *Offset* resource blocks, and *Offset* satisfies:
bandwidth corresponding to (*Offset* + 2) resource blocks is greater than or equal to a product of bandwidth of the first channel and a first coefficient, and the first coefficient is greater than 0 and less than or equal to 1.

52. The apparatus according to any one of claims 49 to 51, wherein the second feedback information is replication information of the first feedback information, or the second feedback information is a predefined bit stream.

53. The apparatus according to any one of claims 49 to 52, wherein
the second frequency domain resource is an $m^{th}$ interlaced resource in the first channel, the interlaced resource comprises at least two resource blocks interlaced in frequency domain, $m$ is an integer, $m$ is greater than or equal to 1, and is less than or equal to a total quantity of interlaced resources comprised in the first channel, and a value of $m$ is predefined, indicated by the network device, or preconfigured.

54. The apparatus according to any one of claims 49 to 53, wherein
the first resource block of the second frequency domain resource is an $N1^{th}$ resource block in the first channel, and the last resource block of the second frequency domain resource is an $N2^{th}$ resource block in the first channel, wherein N1 and N2 are positive integers, and values of N1 and N2 are predefined, indicated by the network device, or preconfigured.

55. The apparatus according to any one of claims 48 to 54, wherein
the channel occupancy time is a maximum channel occupancy time determined by a second terminal apparatus, or the channel occupancy time is less than a maximum channel occupancy time determined by the second terminal apparatus.

56. The apparatus according to any one of claims 48 to 55, wherein the transceiver module is further configured to:
transmit indication information of the channel occupancy time to the first terminal apparatus.

57. The apparatus according to any one of claims 48 to 56, wherein the first frequency domain resource is determined based on an index and/or a quantity of interlaced resources corresponding to the time-frequency resource carrying the first data and identifier information corresponding to the first data.

58. The apparatus according to any one of claims 48 to 57, wherein the transceiver module is further specifically configured to:
receive the first feedback information on the first frequency domain resource in the feedback time unit based on a first code domain resource, wherein the first code domain resource is determined based on the index and/or the quantity of interlaced resources corresponding to the time-frequency resource carrying the first data and the identifier information corresponding to the first data.

59. The apparatus according to any one of claims 48 to 58, wherein the processing module is specifically configured to:
determine the feedback time unit from a time unit set based on the time-frequency resource carrying the first data, wherein the time unit set comprises at least one time unit, and a time unit in the at least one time unit comprises a feedback resource.

60. The apparatus according to claim 59, wherein a time domain gap between a start location of the first time unit in the time unit set and a start location of the channel occupancy time is $X_1$ time units, a time domain gap between every two adjacent time units in the time unit set is $M_1$ time units, $X_1$ and $M_1$ are predefined, indicated by the network device, indicated by the second terminal apparatus, or preconfigured, $X_1$ is a positive integer greater than or equal to 0, and $M_1$ is a positive integer greater than or equal to 0.

61. The apparatus according to claim 60, wherein the transceiver module is further configured to:
transmit first indication information to the first terminal apparatus, wherein the first indication information is used by the first terminal apparatus to determine the time unit set from a time unit comprised in the channel occupancy time.

62. The apparatus according to claim 60 or 61, wherein the processing module is further configured to:
determine, based on received second indication information, the time unit set from the time unit comprised in the channel occupancy time, wherein the second indication information is from the network device.

63. The apparatus according to any one of claims 48 to 62, wherein the feedback time unit is the last time unit in the channel occupancy time.

64. The apparatus according to any one of claims 48 to 63, wherein the processing module is specifically configured to: when the channel occupancy time is less than a time threshold, the feedback time unit is the last time unit in the channel occupancy time.

65. A communication apparatus, comprising a communication module and a processing module, wherein the processing module controls the communication module to implement the method according to any one of claims 1 to 32.

66. A computer-readable storage medium, wherein the computer-readable storage medium stores a computer program or instructions, and when the computer program or the instructions are executed by a computing device, the computing device is enabled to perform the method according to any one of claims 1 to 32.

67. A computer program product comprising instructions, wherein when the computer program product runs on a computer, the method according to any one of claims 1 to 32 is performed.

68. A chip, wherein the chip is coupled to a memory, and is configured to: read and execute program instructions stored in the memory, to implement the method according to any one of claims 1 to 32.

69. A communication system, comprising the communication apparatus according to any one of claims 33 to 47 and/or the communication apparatus according to any one of claims 48 to 64.

FIG. 1

First terminal apparatus

a. There is network coverage

First terminal apparatus

b. There is network coverage

c. There is no network coverage

First terminal apparatus

FIG. 2

FIG. 3A

Interlaced
resource #1,
and RB #1

Interlaced
resource #1,
and RB #11

...

Interlaced
resource #1,
and RB #91

RB

FIG. 3B

RB index

Sub channel

← Slot →

Slot number

Possible PSCCH location

Location of AGC information

FIG. 4

FIG. 5

| Processing module 610 | Transceiver module 620 |

FIG. 6

Antenna

710

Radio frequency circuit

720

Memory

Processor

Input/Output apparatus

FIG. 7

EP 4 333 343 A1

| First terminal apparatus | | Second terminal apparatus |
|---|---|---|

S101: Access a first channel

S101: Transmit first data

| S102: Determine a feedback time unit in a channel occupancy time | Determine the feedback time unit in the channel occupancy time |
|---|---|

S103: Access the first channel

S103: Transmit first feedback information on a first frequency domain resource in the feedback time unit, and transmit second feedback information on a second frequency domain resource in the feedback time unit

FIG. 8

39

FIG. 9

FIG. 10

FIG. 11

FIG. 12

Channel occupancy time

First RB in a
second
frequency
domain resource

...

RB

...

...

...

Slot

Slot in which the second
frequency domain resource
is located

Last RB in the
second frequency
domain resource

FIG. 13

PSFCH

First two
symbols in a slot

...

Channel
occupancy
time

FIG. 14

FIG. 15

## INTERNATIONAL SEARCH REPORT

| International application No. |
|---|
| **PCT/CN2022/097892** |

**A.** **CLASSIFICATION OF SUBJECT MATTER**

H04L 5/00(2006.01)i

According to International Patent Classification (IPC) or to both national classification and IPC

**B.** **FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 反馈, 应答, 响应, 侧链路, 旁路, 副链路, 次链路, 占用, 信道, 带宽, 频带, 两个, 另一, 第二, HARQ, ACK, feedback, sidelink, SL, PSFCH, COT, second, two, another, other, OCB, offset, occupy, more, channel, band

**C.** **DOCUMENTS CONSIDERED TO BE RELEVANT**

| Category* | Citation of document, with indication, where appropriate, of the relevant passages | Relevant to claim No. |
|---|---|---|
| PX | US 2022104263 A1 (QUALCOMM INC.) 31 March 2022 (2022-03-31)<br>description, paragraphs [0007]-[0257] | 1-69 |
| X | CN 112152760 A (HUAWEI TECHNOLOGIES CO., LTD.) 29 December 2020 (2020-12-29)<br>description, paragraphs [0005]-[0192] | 1-69 |
| X | WO 2020209594 A1 (LG ELECTRONICS INC.) 15 October 2020 (2020-10-15)<br>description, paragraphs [28]-[464] | 1-69 |
| A | CN 112398592 A (HUAWEI TECHNOLOGIES CO., LTD.) 23 February 2021 (2021-02-23)<br>entire document | 1-69 |
| A | WO 2021071192 A1 (LG ELECTRONICS INC.) 15 April 2021 (2021-04-15)<br>entire document | 1-69 |

☐ Further documents are listed in the continuation of Box C.　　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2022** | **08 August 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/097892**

| Patent document cited in search report | | | Publication date (day/month/year) | Patent family member(s) | | | Publication date (day/month/year) |
|---|---|---|---|---|---|---|---|
| US | 2022104263 | A1 | 31 March 2022 | WO | 2022073021 | A1 | 07 April 2022 |
| CN | 112152760 | A | 29 December 2020 | WO | 2020259580 | A1 | 30 December 2020 |
| | | | | EP | 3965398 | A1 | 09 March 2022 |
| WO | 2020209594 | A1 | 15 October 2020 | US | 2022191847 | A1 | 16 June 2022 |
| CN | 112398592 | A | 23 February 2021 | WO | 2021032015 | A1 | 25 February 2021 |
| | | | | CN | 112398592 | B | 01 October 2021 |
| WO | 2021071192 | A1 | 15 April 2021 | KR | 20220030301 | A | 10 March 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110688161